(19) Europäisches Patentamt
European Patent Office
Office européen des brevets

(11) EP 4 722 259 A1

(12) **EUROPEAN PATENT APPLICATION**
published in accordance with Art. 153(4) EPC

(43) Date of publication:
**08.04.2026 Bulletin 2026/15**

(21) Application number: **24811243.5**

(22) Date of filing: **28.03.2024**

(51) International Patent Classification (IPC):
***C08F 4/6592*** *(2006.01)* ***C08F 110/02*** *(2006.01)*

(52) Cooperative Patent Classification (CPC):
**C08F 4/6592; C08F 110/02**

(86) International application number:
**PCT/KR2024/003971**

(87) International publication number:
**WO 2024/242304 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.05.2023 KR 20230067541**

(71) Applicant: **Hanwha Solutions Corporation**
**Seoul 04541 (KR)**

(72) Inventors:
- **SEO, Jun Ho**
  **Seoul 04541 (KR)**
- **PARK, Hye Ran**
  **Seoul 04541 (KR)**
- **JOUNG, Ui Gab**
  **Seoul 04541 (KR)**
- **LEE, Mun Hee**
  **Seoul 04541 (KR)**
- **KIM, Sung Dong**
  **Seoul 04541 (KR)**
- **KIM, Ji Ho**
  **Seoul 04541 (KR)**

(74) Representative: **Berggren Oy**
**P.O. Box 16**
**Fabianinkatu 21**
**00101 Helsinki (FI)**

(54) **HYBRID SUPPORTED METALLOCENE CATALYST AND MANUFACTURING METHOD THEREFOR**

(57) The present invention relates to a hybrid supported metallocene catalyst and a manufacturing method therefor. A polyolefin having a wide molecular weight distribution may be obtained by using a catalyst prepared by changing the sequence of loading three kinds of transition metal compounds having specific contents among four kinds of transition metal compounds.

FIG.1

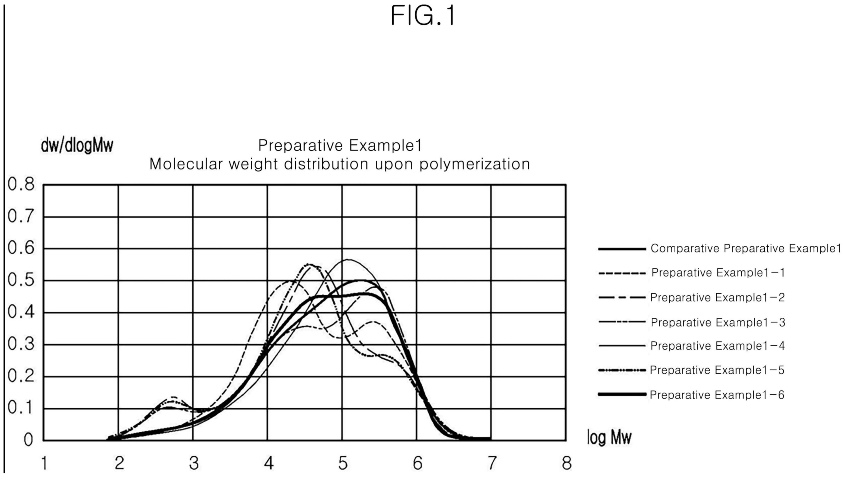


EP 4 722 259 A1

## Description

[Technical Field]

The present invention relates to a hybrid supported metallocene catalyst and a method of preparing the same.

[Background Art]

A Ziegler-Natta catalyst widely applied to existing commercial processes is a multi-active site catalyst. Thus, the Ziegler-Natta catalyst is characterized by a wide molecular weight distribution of a resulting polymer in polymerization of olefin and production of olefin with desired properties using the Ziegler-Natta catalyst is difficult due to a non-uniform composition distribution of a polymerized comonomer.

A metallocene catalyst is a single active site catalyst having one type of active site and can achieve significant adjustment of a molecular weight, stereoregularity, crystallinity, and reactivity of a resulting polymer, particularly reactivity of comonomers, depending on the structure of the catalyst and ligands. However, polyolefin polymerized using the metallocene catalyst has a narrow molecular weight distribution and has been difficult to apply to work sites due to very low productivity resulting from the effect of extrusion load when applied to some products.

To overcome such technical problems, research has been focused on development of catalysts or processes that can control the molecular weight distribution of polyolefin during polymerization.

In particular, although a hybrid supported catalyst is often prepared by combining two types of catalysts, it is difficult to achieve goals, such as a wide molecular weight distribution and the like, when properties of the catalysts are too similar.

(Patent Reference 1) KR 10-2455178 B

[Disclosure]

[Technical Problem]

It is an aspect of the present invention to provide a method of preparing a hybrid supported metallocene catalyst through different loading sequences of three compounds having specific chemical formulas and specific contents among four transition metal compounds, and a hybrid supported metallocene catalyst prepared thereby.

[Technical Solution]

1. One aspect of the present invention relates to a method of preparing a hybrid supported metallocene catalyst. The method of preparing a hybrid supported metallocene catalyst includes: preparing a first catalyst compound solution including one or two catalyst compounds selected from the group consisting of a first transition metal compound represented by Formula 1, a second transition metal compound represented by Formula 2, a third transition metal compound represented by Formula 3, and a fourth transition metal compound represented by Formula 4; preparing a second catalyst compound solution including one or two transition metal compounds selected from the group consisting of the first to fourth transition metal compounds not included in the first catalyst compound solution; preparing a transition metal-carrier complex by adding the first catalyst compound solution to a carrier; and further adding the second catalyst compound solution to the transition metal-carrier complex.

The hybrid supported metallocene catalyst includes three compounds selected from among the first transition metal compound, the second transition metal compound, the third transition metal compound, and the fourth transition metal compound.

[Formula 1]

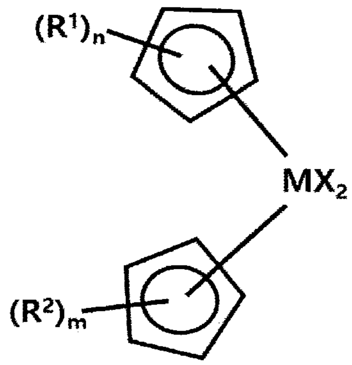

[14]

(In Formula 1,

$R^1$ and $R^2$ are independently hydrogen, a substituted or unsubstituted $C_1$ to $C_{20}$ alkyl group, a substituted or unsubstituted $C_2$ to $C_{20}$ alkenyl group, a substituted or unsubstituted $C_6$ to $C_{20}$ aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;

X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene; and

M is titanium (Ti), zirconium (Zr), or hafnium (Hf); and

n and m are independently an integer of 0 to 5.)

[Formula 2]

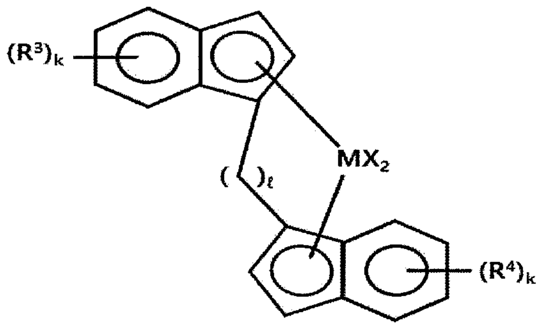

(In Formula 2,

$R^3$ and $R^4$ are independently hydrogen, a substituted or unsubstituted $C_1$ to $C_{20}$ alkyl group, a substituted or unsubstituted $C_2$ to $C_{20}$ alkenyl group, a substituted or unsubstituted $C_6$ to $C_{20}$ aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;

X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene;

M is titanium (Ti), zirconium (Zr), or hafnium (Hf); and

$\ell$ is an integer of 1 to 6, and k is an integer of 0 to 4.)

[Formula 3]

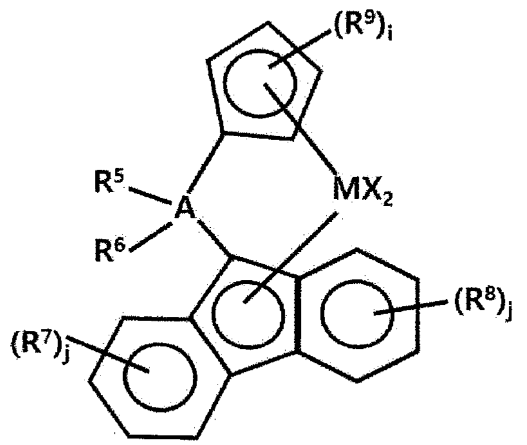

(In Formula 3,

$R^5$ to $R^9$ are independently hydrogen, a substituted or unsubstituted $C_1$ to $C_{20}$ alkyl group, a substituted or unsubstituted $C_2$ to $C_{20}$ alkenyl group, a substituted or unsubstituted $C_6$ to $C_{20}$ aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;
X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene;
M is titanium (Ti), zirconium (Zr), or hafnium (Hf);
A is carbon (C), silicon (Si), germanium (Ge), or tin (Sn); and
i and j are independently an integer of 0 to 4.)

[Formula 4]

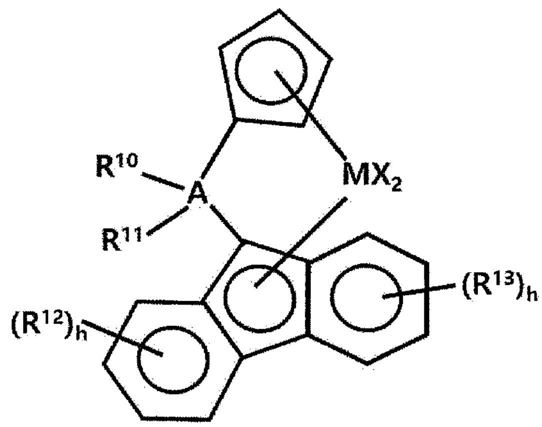

(In Formula 4,

$R^{10}$ to $R^{13}$ are independently hydrogen, a substituted or unsubstituted $C_1$ to $C_{20}$ alkyl group, a substituted or unsubstituted $C_2$ to $C_{20}$ alkenyl group, a substituted or unsubstituted $C_6$ to $C_{20}$ aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;
X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene;

M is titanium (Ti), zirconium (Zr), or hafnium (Hf);
A is carbon (C), silicon (Si), germanium (Ge), or tin (Sn); and
h is an integer of 0 to 4.)

2. In embodiment 1, the hybrid supported metallocene catalyst may include the first transition metal compound, the third transition metal compound, and the fourth transition metal compound.

3. In embodiments 1 and 2, the first transition metal compound, the third transition metal compound and the fourth transition metal compound may be present in a mole ratio of about 3 to 5:1 to 2:4 to 6. In one embodiment, the first transition metal compound, the third transition metal compound and the fourth transition metal compound may be present in a mole ratio of about 3.1 to 4.9:about 1.1 to 1.9:about 4.2 to 5.9, for example, about 3.2 to 3.8:about 1.6 to 1.9:about 5.3 to 5.9, about 3.8 to 4.4:about 1 to 1.6:about 4.8 to 5.3, or about 4.4 to 4.9:about 1.1 to 1.5:about 4.2 to 4.8.

4. In embodiment 1, the hybrid supported metallocene catalyst may include the second transition metal compound, the third transition metal compound, and the fourth transition metal compound.

5. In embodiments 1 to 4, the second transition metal compound, the third transition metal compound, and the fourth transition metal compound may be present in a mole ratio of about 3 to 5:about 1 to 2:about 4 to 6. In one embodiment, the second transition metal compound, the third transition metal compound, and the fourth transition metal compound may be present in a mole ratio of about 3.1 to 4.9:about 1.1 to 1.9:about 4.2 to 5.9, for example, about 3.2 to 3.8:about 1.6 to 1.9:about 5.3 to 5.9, about 3.8 to 4.4:about 1 to 1.6:about 4.8 to 5.3, or about 4.4 to 4.9:about 1.1 to 1.5:about 4.2 to 4.8.

6. In embodiments 1 to 5, in Formula 1, $R^1$ and $R^2$ may be independently a $C_1$ to $C_{20}$ alkyl group, X may be independently halogen, and n may be 1, and m may be 4; in Formula 2, $R^3$ and $R^4$ may be independently hydrogen, X may be independently halogen, k may be 0, and $\ell$ may be 2; in Formula 3, $R^5$ and $R^6$ may be independently a $C_6$ to $C_{20}$ aryl group, $R^7$ to $R^9$ may be independently a $C_1$ to $C_{20}$ alkyl group, X may be independently halogen, and i and j may be independently 1; and in Formula 4, $R^{10}$ and $R^{11}$ may be independently a $C_6$ to $C_{20}$ aryl group, $R^{12}$ to $R^{13}$ may be independently a $C_1$ to $C_{20}$ alkyl group, X may be independently halogen, and h may be 1.

7. In embodiments 1 to 6, in Formulas 1, 2, 3 and 4, M may be zirconium (Zr); and in Formulas 3 and 4, A may be carbon (C).

8. Another aspect of the present invention relates to a hybrid supported metallocene catalyst. The hybrid immersed metallocene catalyst is prepared by the method according to any of embodiments 1 to 7.

9. In other embodiments, the hybrid supported metallocene catalyst may include three compounds selected from the group consisting of a first transition metal compound represented by Formula 1; a second transition metal compound represented by Formula 2; a third transition metal compound represented by Formula 3; and a fourth transition metal compound represented by Formula 4 below, and may satisfy Equation 2.

[Formula 1]

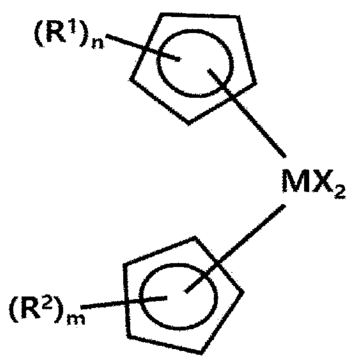

(In Formula 1,

$R^1$ and $R^2$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or unsubstituted $C_1$ to $C_{20}$ alkyl group, a substituted or unsubstituted $C_1$ to $C_{20}$ heteroalkyl group, a substituted or unsubstituted C3 to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;
X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene;

and
M is titanium (Ti), zirconium (Zr), or hafnium (Hf); and
n and m are independently an integer of 0 to 5.)

[Formula 2]

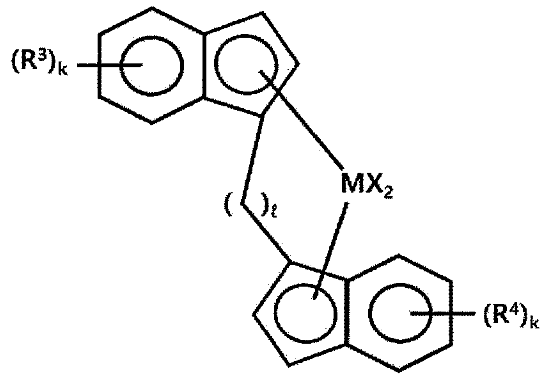

[59]

(In Formula 2,

$R^3$ and $R^4$ are independently hydrogen, a substituted or unsubstituted $C_1$ to $C_{20}$ alkyl group, a substituted or unsubstituted $C_2$ to $C_{20}$ alkenyl group, a substituted or unsubstituted $C_6$ to $C_{20}$ aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;
X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene; and
M is titanium (Ti), zirconium (Zr), or hafnium (Hf); and
$\ell$ is an integer of 1 to 6, and k is an integer of 0 to 4.)

[Formula 3]

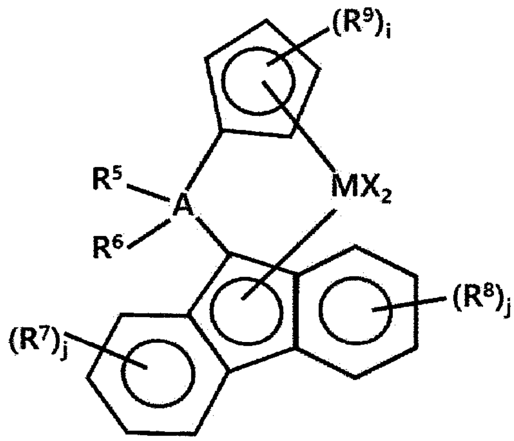

(In Formula 3,

$R^5$ to $R^9$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or

unsubstituted $C_1$ to $C_{20}$ silyl group;
X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene;
M is titanium (Ti), zirconium (Zr), or hafnium (Hf);
A is carbon (C), silicon (Si), germanium (Ge), or tin (Sn); and
i and j are independently an integer of 0 to 4.)

[Formula 4]

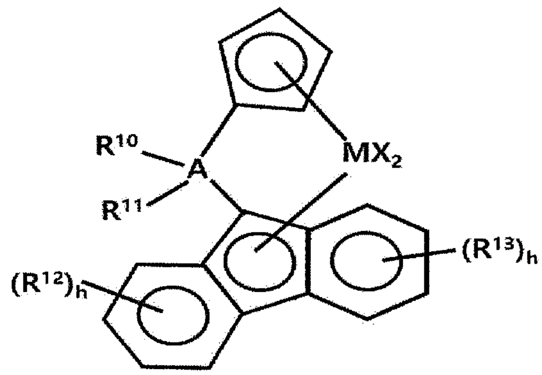

(In Formula 4,

$R^{10}$ to $R^{13}$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;
X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene;
M is titanium (Ti), zirconium (Zr), or hafnium (Hf);
A is carbon (C), silicon (Si), germanium (Ge), or tin (Sn); and
h is an integer of 0 to 4.)

[Equation 2]

$$PDI_{PE} \geq 31$$

(In Equation 2, $PDI_{PE}$ denotes a molecular weight distribution (PDI, Mw/Mn) value measured by gel permeation chromatography at a measurement temperature of 170°C for polyethylene polymerized using a hybrid supported metallocene catalyst.)

10. In embodiment 9, the hybrid supported metallocene catalyst may include the first transition metal compound, the third transition metal compound, and the fourth transition metal compound.

11. In embodiments 9 and 10, the first transition metal compound, the third transition metal compound, and the fourth transition metal compound may be present in a mole ratio of about 3 to 5:about 1 to 2:about 4 to 6. In one embodiment, the first transition metal compound, the third transition metal compound and the fourth transition metal compound may be present in a mole ratio of about 3.1 to 4.9:about 1.1 to 1.9:about 4.2 to 5.9, for example, about 3.2 to 3.8:about 1.6 to 1.9:about 5.3 to 5.9, about 3.8 to 4.4:about 1 to 1.6:about 4.8 to 5.3, or about 4.4 to 4.9:about 1.1 to 1.5:about 4.2 to 4.8.

12. In embodiment 9, the hybrid supported metallocene catalyst may include the second transition metal compound, the third transition metal compound, and the fourth transition metal compound.

13. In embodiment 12, the second transition metal compound, the third transition metal compound and the fourth transition metal compound may be present in a mole ratio of about 3 to 5:about 1 to 2:about 4 to 6. In one embodiment, the second transition metal compound, the third transition metal compound and the fourth transition metal compound may be present in a mole ratio of about 3.1 to 4.9:about 1.1 to 1.9:about 4.2 to 5.9, for example, about 3.2 to 3.8:about 1.6 to 1.9:about 5.3 to 5.9, about 3.8 to 4.4:about 1 to 1.6:about 4.8 to 5.3, or about 4.4 to 4.9:about 1.1 to 1.5:about 4.2 to 4.8.

14. In embodiments 9 to 13, in Formula 1, $R^1$ and $R^2$ may be independently a $C_1$ to $C_{20}$ alkyl group, X may be

independently halogen, and n may be 1, and m may be 4; in Formula 2, $R^3$ and $R^4$ may be independently hydrogen, X may be independently halogen, k may be 0, and $\ell$ may be 2; in Formula 3, $R^5$ and $R^6$ may be independently a $C_6$ to $C_{20}$ aryl group, $R^7$ to $R^9$ may be independently a $C_1$ to $C_{20}$ alkyl group, X may be independently halogen, and i and j may be independently 1; and in Formula 4, $R^{10}$ and $R^{11}$ may be independently a $C_6$ to $C_{20}$ aryl group, $R^{12}$ to $R^{13}$ may be independently a $C_1$ to $C_{20}$ alkyl group, X may be independently halogen, and h may be 1.

15. In embodiments 9 to 14, in Formulas 1 to 4, M is zirconium (Zr); and in Formulas 3 and 4, A may be carbon (C).

16. Yet another aspect of the present invention relates to a method of preparing polyolefin. The preparation method may include polymerizing an olefin represented by Formula 5 in the presence of the hybrid supported metallocene catalyst according to any one of embodiments 1 to 15.

[Formula 5] $CH_2=CHR^{14}$

In Formula 5, $R^{14}$ is hydrogen or a $C_1$ to $C_6$ alkyl or aryl group.

17. Yet another aspect of the present invention relates to a polyethylene resin. The polyolefin resin may be polymerized by adding an ethylene monomer in the presence of the hybrid supported metallocene catalyst according to any one of embodiments 1 to 15 and may have an MFR ratio ($MFR_{21.6}/MFR_{2.16}$) of about 58 to about 213. In one embodiment, the polyethylene resin may have an MFR ratio ($MFR_{21.6}/MFR_{2.16}$) of about 60 to 211, for example, about 61 to 80, about 80 to 100, about 100 to 120, about 120 to 140, about 140 to 160, about 160 to 180, about 180 to 200, or about 200 to 213.

18. In embodiment 17, the olefin resin may have an $MFR/MFR_0$ value of less than about 0.980 or greater than about 1.10, as calculated according to Equation 1. In one embodiment, the olefin resin may have an $MFR/MFR_0$ value of about 0.77 to 0.81, about 0.81 to 0.84, or about 0.84 to 0.975. In other embodiments, the olefin resin may have an $MFR/MFR_0$ value of, for example, about 1.105 to 1.25, about 1.25 to 1.45, about 1.45 to 1.55, or about 1.45 to 1.55.

[Equation 1]

$$MFR/MFR_0$$

(In Equation 1, MFR is an MFR value of a resin prepared using a hybrid supported metallocene catalyst sequentially loaded by the metallocene catalyst preparation method according to the present invention, and $MFR_0$ is an MFR value of a resin prepared using a hybrid supported metallocene catalyst simultaneously loaded without sequence.)

19. The polyethylene resin according to embodiments 17 and 18 may have a molecular weight distribution (PDI, Mw/Mn) value of about 31 or more, as measured by gel permeation chromatography at a measurement temperature of 170°C. In some embodiments, the polyethylene resin may have a molecular weight distribution (PDI, Mw/Mn) value of, for example, about 31.5 to 38.5, about 38.5 to 45.5, about 45.5 to 52.5, or about 52.5 to 59.5.

20. Yet another aspect of the present invention relates to a method of controlling properties of a polyethylene resin prepared using the hybrid supported metallocene catalyst according to embodiments 9 to 15. The method may include: setting a PDI value, an MFR value, and an Mw value of a target polyethylene resin; and selecting a hybrid supported metallocene catalyst expressing the set PDI value, MFR value, and Mw value, wherein the hybrid supported metallocene catalyst may be selected from a parent population of hybrid supported metallocene catalysts prepared by changing a loading sequence of three compounds selected from among the first transition metal compound, the second transition metal compound, the third transition metal compound, and the fourth transition metal compound.

21. In embodiment 20, when the preset Mw value is about 100,000 or more, a hybrid supported metallocene catalyst prepared using the first transition metal compound, the third transition metal compound, and the fourth transition metal compound may be used, and when the preset Mw value is less than about 100,000, a hybrid supported metallocene catalyst prepared using the second transition metal compound, the third transition metal compound, and the fourth transition metal compound may be used.

[Advantageous Effects]

In a method of preparing a hybrid supported metallocene catalyst, a metallocene catalyst applicable to preparation of polyolefin having a wide molecular weight distribution is prepared by changing a loading sequence of three compounds selected from among four transition metal compounds and having specific chemical formulas and contents, and the polyolefin can be applied to various target products by controlling properties of the polyethylene.

[Description of Drawings]

FIG. 1 is a graph depicting molecular weight distribution of polyethylene prepared in Examples 1 to 6 and Comparative Example 1.

FIG. 2 is a graph depicting molecular weight distribution of polyethylene prepared in Examples 7 to 12 and Comparative Example 2.

[Mode for Invention]

The above and other objects, features, and advantages will become apparent from the following embodiments described with reference to the accompanying drawings. However, the present invention is not limited to the embodiments described herein and may be embodied in other forms. Rather, the following embodiments are given by way of illustration to provide a thorough and complete understanding of the present invention such that technical ideas may be fully conveyed to those skilled in the art.

As used herein, it should be understood that the terms "comprise", "include", "have", and the like are intended to specify the presence of stated features, numbers, steps, operations, components, parts, or combinations thereof, and are not intended to preclude the presence or addition of one or more other features, numbers, steps, operations, components, parts, or combinations thereof. As used herein, when an element, such as a layer, a film, a region, a plate, and the like, is referred to as being disposed "above" or "on" another element, it may be directly placed on an upper surface the other element or intervening element(s) may be present. Conversely, when an element, such as a layer, a film, a region, a plate, and the like, is referred to as being disposed "below" or "under" another element, it may be directly placed on a lower surface of the other element or intervening element(s) may be present.

Herein, unless stated otherwise, all numbers, values and/or expressions used herein to express amounts of components, reaction conditions, polymer compositions, and formulations should be understood to be qualified in all cases by the term "about", since such numbers are inherently approximate values reflecting, among other things, various uncertainties in measurement encountered in obtaining such values. Further, when a numerical range is disclosed herein, such a range is continuous and includes all values from the minimum value of the range up to and including the maximum value of the range, unless indicated otherwise. Furthermore, where such a range refers to integers, the range includes all integers from the minimum value of the range up to and including the maximum value of the range, unless indicated otherwise.

Herein, when a certain range is described for a variable, the variable will be understood to include all values within the stated range including the described endpoints of the stated range. For example, the range of "5 to 10" will be understood to include not only values, such as 5, 6, 7, 8, 9, and 10, but also any subrange thereof, such as 6 to 10, 7 to 10, 6 to 9, 7 to 9, and any value between integers that fall within the stated range, such as 5.5, 6.5, 7.5, 5.5 to 8.5, and 6.5 to 9. In addition, for example, the range of "10% to 30%" will be understood to include not only values, such as 10%, 11%, 12%, 13%, and all integers up to and including 30%, but also arbitrary subranges thereof, such as 10% to 15%, 12% to 18%, 20% to 30%, and arbitrary values between any of integers within the stated range, such as 10.5%, 15.5%, 25.5%, and the like.

Polyolefin polymerized using a typical metallocene catalyst has a narrow molecular weight distribution and application of the polyolefin to work sites is difficult due to very low productivity resulting from the effect of extrusion load and the like when applied to some products.

In order to solve this problem, the inventors have conducted various studies and completed the present invention based on the findings that a hybrid supported metallocene catalyst prepared by changing a loading sequence of three transition metal compounds selected from among four transition metal compounds each having a specific chemical structure can suppress non-uniformity of metallocene catalysts, and can adjust properties of polyolefin, such as molecular weight distribution and the like.

Unless stated otherwise, "$C_1$ to $C_n$ alkyl" refers to primary to tertiary alkyl groups having a carbon atom number of 1 to n. The alkyl groups may be functional groups, for example, methyl, ethyl, n-propyl, i-propyl, n-butyl, i-butyl, tert-butyl, n-hexyl, tert-butyl, n-hexyl, and the like.

Unless stated otherwise, "aryl" refers to a chemical group obtained by removing one hydrogen atom from a $C_2$ to $C_{30}$ monocyclic or polycyclic compound including at least one benzene ring and derivatives thereof. For example, the monocyclic or polycyclic compound including at least one benzene ring includes a benzene ring, toluene or xylene, in which an alkyl side chain is attached to a benzene ring; biphenyl and the like, in which two or more benzene rings are bonded to each other by a single bond; fluorene, xanthene, or anthraquinone, in which a benzene ring is condensed with a cycloalkyl group or a hetero-cycloalkyl group; naphthalene or anthracene, in which two or more benzene rings are condensed, and the like.

Unless stated otherwise, the prefix "hetero" means that a carbon atom is substituted with one to three heteroatoms selected from the group consisting of -N-, - O-, -S-, and -P-. For example, a heteroatom may be pyridine, pyrrole, or carbazole containing a nitrogen atom; furan or dibenzofuran containing an oxygen atom; dibenzothiophene or diphenylamine, and the like.

Unless stated otherwise, "halogen" refers to a group XVII element, for example, a fluoro group, a chloro group, a

bromo group, or an iodo group.

In accordance with one aspect of the present invention, a method of preparing a hybrid monomolecular metallocene catalyst includes: preparing a first catalyst compound solution including one or two catalyst compounds selected from the group consisting of a first transition metal compound represented by Formula 1, a second transition metal compound represented by Formula 2, a third transition metal compound represented by Formula 3, and a fourth transition metal compound represented by Formula 4; preparing a second catalyst compound solution including one or two transition metal compounds selected from the group consisting of the first to fourth transition metal compounds not included in the first catalyst compound solution; preparing a transition metal-carrier complex by adding the first catalyst compound solution to a carrier; and further adding the second catalyst compound solution to the transition metal-carrier complex.

[Formula 1]

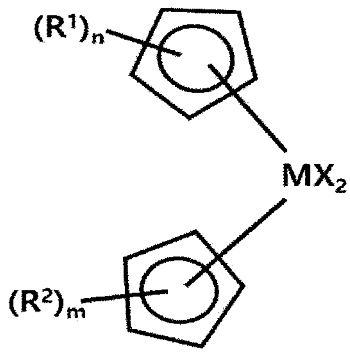

(In Formula 1,

$R^1$ and $R^2$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or unsubstituted $C_1$ to $C_{20}$ alkyl group, a substituted or unsubstituted $C_1$ to $C_{20}$ heteroalkyl group, a substituted or unsubstituted C3 to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;

X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene; and

M is titanium (Ti), zirconium (Zr), or hafnium (Hf); and

n and m are independently an integer of 0 to 5.)

[Formula 2]

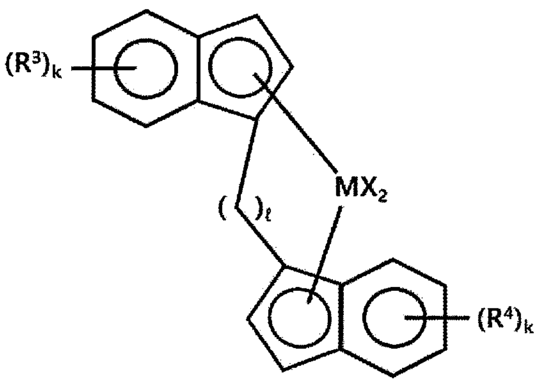

(In Formula 2,

$R^3$ and $R^4$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or

unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;

X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene; and

M is titanium (Ti), zirconium (Zr), or hafnium (Hf); and

$\ell$ is an integer of 1 to 6, and k is an integer of 0 to 4.)

[Formula 3]

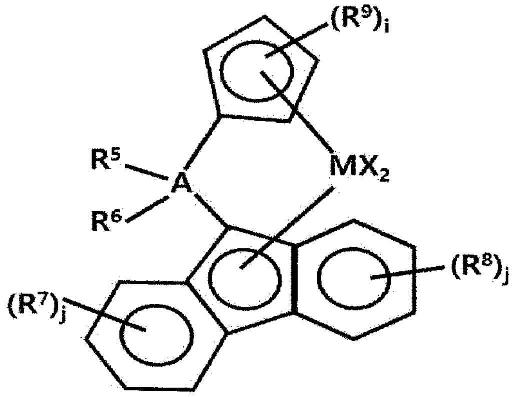

(In Formula 3,

$R^5$ to $R^9$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;

X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene;

M is titanium (Ti), zirconium (Zr), or hafnium (Hf);

A is carbon (C), silicon (Si), germanium (Ge), or tin (Sn); and

i and j are independently an integer of 0 to 4.)

[Formula 4]

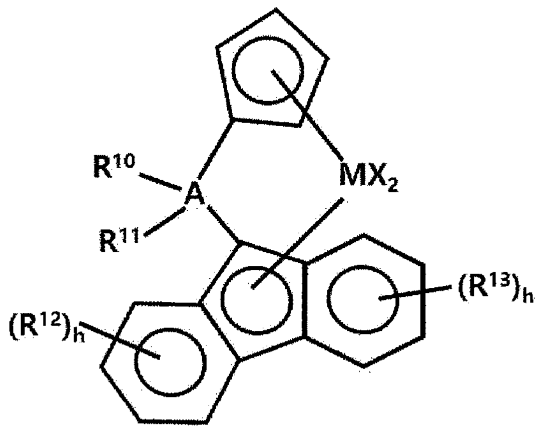

(In Formula 4,

$R^{10}$ to $R^{13}$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;

X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene;

M is titanium (Ti), zirconium (Zr), or hafnium (Hf);

A is carbon (C), silicon (Si), germanium (Ge), or tin (Sn); and

h is an integer of 0 to 4.)

Here, substituents of $R^1$ to $R^{13}$ may be independently at least one selected from the group consisting of a halogen group, a cyano group, a nitro group, and a $C_1$ to $C_8$ alkyl group.

In one embodiment, in Formula 1, $R^1$ and $R^2$ may be independently a $C_1$ to $C_{20}$ alkyl group, X may be independently halogen, n may be 1, and m may be 4.

In Formula 2, $R^3$ and $R^4$ may be independently hydrogen, X may be independently halogen, k may be 0, and $\ell$ may be 2.

In Formula 3, $R^5$ and $R^6$ may be independently a $C_6$ to $C_{20}$ aryl group, $R^7$ to $R^9$ may be independently a $C_1$ to $C_{20}$ alkyl group, X2 is halogen, and i and j may be independently 1.

In Formula 4, $R^{10}$ and $R^{11}$ may be independently a $C_6$ to $C_{20}$ aryl group, $R^{12}$ to $R^{13}$ may be independently a $C_1$ to $C_{20}$ alkyl group, X may be independently halogen, and h may be 1.

In Formulas 1 to 4, M may be zirconium (Zr), and in Formulas 3 and 4, A may be carbon (C).

In one embodiment, Formulas 1 to 4 may be Formula 1-1 to Formula 4-1, respectively.

[Formula 1-1]

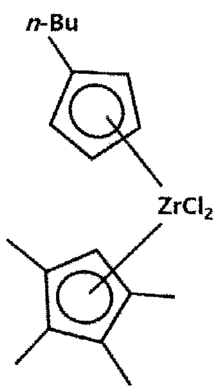

[Formula 2-1]

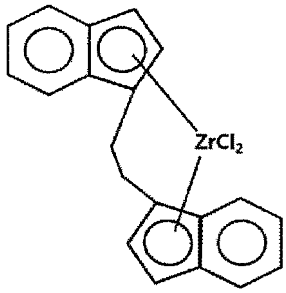

[Formula 3-1]

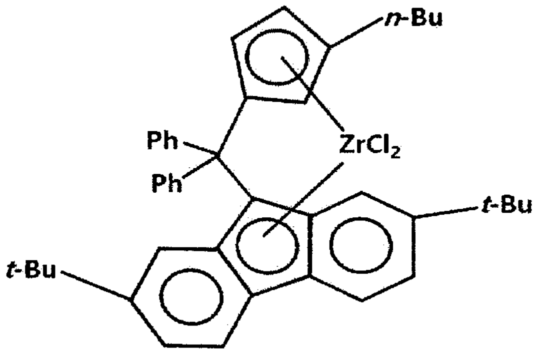

[Formula 4-1]

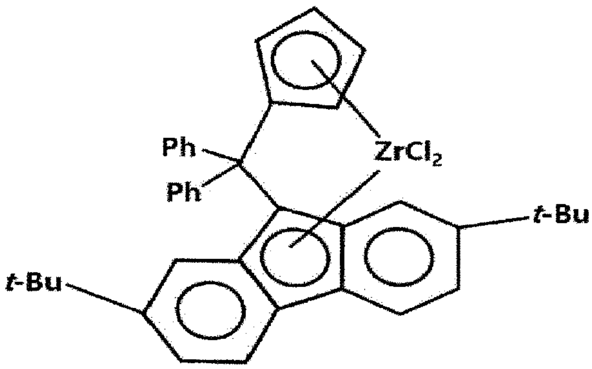

The method of preparing a hybrid supported metallocene catalyst according to one aspect may include selecting three metal transition compounds from among the first to fourth transition metal compounds, and separately adding the selected metal transition compounds to a first catalyst compound solution and a second catalyst compound solution in a different sequence. Here, the three transition metal compounds may include the first transition metal compound, the third transition metal compound, and the fourth transition metal compound; or may include the second transition metal

compound, the third transition metal compound, and the fourth transition metal compound.

According to one embodiment, the step of preparing a first catalyst compound solution may include adding at least one selected from the group consisting of the first transition metal compound, the second transition metal compound, the third transition metal compound and the fourth transition metal compound, and a co-catalyst compound to a solvent, followed by stirring.

According to one embodiment, when the first transition metal compound, the third transition metal compound, and the fourth transition metal compound are selected, the first catalyst compound solution may include one or two selected from the group consisting of the first transition metal compound, the third transition metal compound, and the fourth transition metal compound, preferably only one of the first transition metal compound, the third transition metal compound, and the fourth transition metal compound; or the first transition metal compound and the third transition metal compound, the first transition metal compound and the fourth transition metal compound, or the third transition metal compound and the fourth transition metal compound.

According to one embodiment, when the second transition metal compound, the third transition metal compound, and the fourth transition metal compound are selected, the first catalyst compound solution may include one or two selected from the group consisting of the second transition metal compound, the third transition metal compound, and the fourth transition metal compound, preferably, only one of the second transition metal compound, the third transition metal compound, and the fourth transition metal compound; or the second transition metal compound and the third transition metal compound, the second transition metal compound and the fourth transition metal compound, or the third transition metal compound and the fourth transition metal compound.

According to one embodiment, the co-catalyst compound may be a compound capable of activating the transition metal compounds, for example, an aluminoxane compound, an organo-aluminum compound, or a bulky compound capable of activating the transition metal compounds, preferably, methyl aluminoxane (MAO).

The content of the co-catalyst compound may vary depending on the type of transition metal compound. Specifically, each of the transition metal compounds and the co-catalyst may be present in a mole ratio of about 1:100 to 200. In some embodiments, each of the transition metal compounds and the co-catalyst may be present in a mole ratio of about 1:102 to 198, for example, about 1:105 to 120, about 1:120 to 135, about 1:135 to 150, about 1:150 to 165, about 1:165 to 180, or about 1:180 to 195. If the content of the co-catalyst compound is too low outside this range, there is a problem in that each transition metal compound cannot be sufficiently activated, and if the content of the co-catalyst compound is too high outside this range, there is a problem in that activity of a carrier catalyst system can be lowered due to insufficient amounts of the transition metals in the catalyst system.

According to one embodiment, the solvent may be an aliphatic hydrocarbon solvent, such as pentane, hexane, heptane, octane, nonane, decane, undecane, dodecane, and the like; an aromatic hydrocarbon solvent, such as benzene, monochlorobenzene, dichlorobenzene, trichlorobenzene, toluene, and the like; a halogenated aliphatic hydrocarbon solvent, such as dichloromethane, trichloromethane, dichloroethane, trichloroethane, and the like; an ether-based solvent, such as diethyl ether and tetrahydrofuran; and an organic solvent, such as acetone, ethyl acetate, and the like. Preferably, the solvent is toluene.

According to one embodiment, the first catalyst compound solution may be stirred at a temperature of about 0°C to about 100°C, preferably about 0°C to about 70°C, for about 10 minutes to about 1 hour.

According to one embodiment, the step of preparing a second catalyst compound solution may be performed in the same manner as in the step of preparing a first catalyst compound solution. That is, the second catalyst compound solution may be prepared by adding at least one selected from the group consisting of the first to fourth transition metal compounds and a co-catalyst compound to an organic solvent, followed by stirring. Here, in description of each component in the second catalyst compound solution, redundant description of the first catalyst compound solution will be omitted.

According to one embodiment, when the first transition metal compound, the third transition metal compound, and the fourth transition metal compound are selected, the second catalyst compound solution may include a transition metal compound selected from the group consisting of the first transition metal compound, the third transition metal compound, and the fourth transition metal compound and not added to the first catalyst compound solution, preferably only one of the first transition metal compound, the third transition metal compound, and the fourth transition metal compound and not added to the first catalyst compound solution; or the first transition metal compound and the third transition metal compound, the first transition metal compound and the fourth transition metal compound, or the third transition metal compound and the fourth transition metal compound.

According to one embodiment, when the second transition metal compound, the third transition metal compound, and the fourth transition metal compound are selected, the second catalyst compound solution may include a transition metal compound selected from the group consisting of the second transition metal compound, the third transition metal compound, and the fourth transition metal compound and not included in the first catalyst compound solution, preferably only one of the second transition metal compound, the third transition metal compound, and the fourth transition metal compound; or the second transition metal compound and the third transition metal compound, the second transition metal compound and the fourth transition metal compound, or the third transition metal compound and the fourth transition metal

compound.

According to one embodiment, the content of the co-catalyst compound may vary depending on the type of transition metal compound, as in the first catalyst compound solution described above.

According to one embodiment, the second catalyst compound solution may be stirred at a temperature of about 0°C to about 100°C, preferably about 0°C to about 70°C, for about 10 minutes to about 1 hour, as in preparation of the first catalyst compound solution. In some embodiments, the second catalyst compound solution may be stirred at a temperature of about 2°C to about 98°C, for example, about 5°C to about 20°C, about 20°C to about 35°C, about 35°C to about 50°C, about 50°C to about 65°C, about 65°C to about 80°C, or about 80°C to about 95°C. Further, in some embodiments, the second catalyst compound solution may be stirred for about 12 minutes to about 58 minutes, for example, for about 15 minutes to about 25 minutes, for about 25 minutes to about 35 minutes, for about 35 minutes to about 45 minutes, or for about 45 minutes to about 55 minutes.

According to one embodiment, the step of preparing a transition metal-carrier complex includes adding the first catalyst compound solution to the carrier to load transition metals onto the carrier.

According to one embodiment, the carrier used in preparation of the transition metal-carrier composite is a porous material having a large surface area with microscopic pores on a surface thereof or therein, such as silica ($SiO_2$), alumina ($Al_2O_3$), magnesium chloride ($MgCl_2$), or a mixture thereof, and may be a synthetic polymer or the like. Furthermore, the carrier may include a small amount of carbonates, sulfates, or nitrates.

According to one embodiment, the transition metal-carrier complex may be prepared by stirring the first catalyst compound solution at a temperature of about 10°C to about 130°C, preferably about 50°C to about 100°C, for about 30 minutes to about 6 hours, preferably for about 1 hour to about 2 hours.

According to one embodiment, the method of loading the transition metal compound and the co-catalyst compound in the first catalyst compound solution onto the carrier may include a method of directly loading the main catalyst onto a dehydrated carrier in the presence of a solvent, a method of pretreating the carrier with the co-catalyst compound, followed by loading the main catalyst onto the carrier, a method of loading the main catalyst onto the carrier, followed by post-treatment with the co-catalyst compound, a method of reacting the transition metal compound with the co-catalyst compound, followed by adding the carrier, preferably a method of reacting the transition metal compound with the co-catalyst compound to prepare the first catalyst compound solution, followed by reacting the first catalyst compound solution with the carrier.

According to one embodiment, the step of further adding the second catalyst compound solution to the transition metal-carrier complex is a step of further loading the transition metal compound in the second catalyst compound solution onto the transition metal-carrier complex, in which the transition metal of the first catalyst compound solution is loaded onto the carrier, to finally prepare a hybrid immersed metallocene catalyst. Here, in description of the step of further adding the second catalyst compound solution, redundant description of the step of preparing the transition metal-carrier complex will be omitted.

According to one embodiment, as in the step of preparing the transition metal-carrier complex, the step of further adding the second catalyst compound solution may be performed by adding the second catalyst compound solution to the transition metal-carrier complex, followed by stirring at a temperature of about 10°C to about 130°C, preferably at about 50°C to about 100°C, for about 30 minutes to about 6 hours, preferably for about 1 hour to about 2 hours.

According to one embodiment, in the hybrid supported metallocene catalyst prepared by further adding the second catalyst compound solution, when the first transition metal compound, the third transition metal compound, and the fourth transition metal compound are selected, the first transition metal compound, the third transition metal compound, and the fourth transition metal compound may be present in a mole ratio of about 3 to 5:about 1 to 2:about 4 to 6. In some embodiments, the first transition metal compound, the third transition metal compound, and the fourth transition metal compound may be present in a mole ratio of about 3.1 to 4.9:about 1.1 to 1.9:about 4.2 to 5.9, for example, about 3.2 to 3.8:about 1.6 to 1.9:about 5.3 to 5.9, about 3.8 to 4.4:about 1 to 1.6:about 4.8 to 5.3, or about 4.4 to 4.9:about 1.1 to 1.5:about 4.2 to 4.8. Within this range, the metallocene catalyst can effectively suppress non-uniform characteristics. Furthermore, when the second transition metal compound, the third transition metal compound, and the fourth transition metal compound are selected, the second transition metal compound, the third transition metal compound, and the fourth transition metal compound may be present in a mole ratio of about 3 to 5:about 1 to 2:about 4 to 6. In some embodiments, the second transition metal compound, the third transition metal compound, and the fourth transition metal compound may be present in a mole ratio of about 3.1 to 4.9:about 1.1 to 1.9:about 4.2 to 5.9, for example, about 3.2 to 3.8:about 1.6 to 1.9:about 5.3 to 5.9, about 3.8 to 4.4:about 1 to 1.6:about 4.8 to 5.3, or about 4.4 to 4.9:about 1.1 to 1.5:about 4.2 to 4.8. Within this range, the metallocene catalyst can effectively suppress non-uniform characteristics. According to some embodiments, the hybrid supported metallocene catalyst may include at least three compounds selected from the group consisting of a first transition metal compound represented by Formula 1; a second transition metal compound represented by Formula 2; a third transition metal compound represented by Formula 3; and a fourth transition metal compound represented by Formula 4.

Here, in description of the hybridized immersed metallocene catalyst, redundant description of the method of

preparing the hybridized immersed metallocene catalyst will be omitted.

[Formula 1]

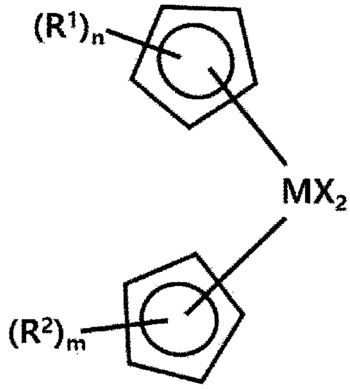

(In Formula 1,

$R^1$ and $R^2$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or unsubstituted $C_1$ to $C_{20}$ alkyl group, a substituted or unsubstituted $C_1$ to $C_{20}$ heteroalkyl group, a substituted or unsubstituted C3 to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;
X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene; and
M is titanium (Ti), zirconium (Zr), or hafnium (Hf); and
n and m are independently an integer of 0 to 5.)

[Formula 2]

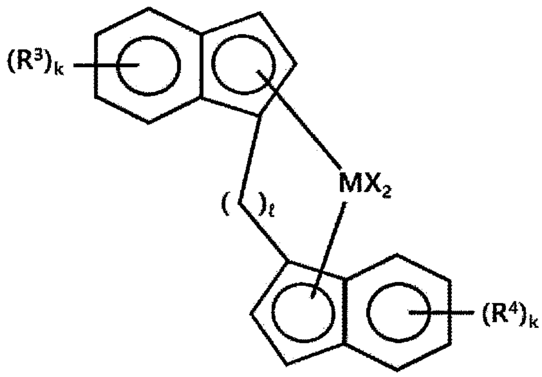

(In Formula 2,

$R^3$ and $R^4$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;

X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene; and

M is titanium (Ti), zirconium (Zr), or hafnium (Hf); and

$\ell$ is an integer of 1 to 6, and k is an integer of 0 to 4.)

[Formula 3]

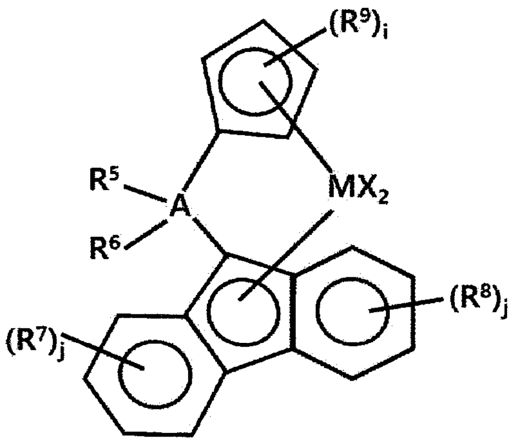

(In Formula 3,

$R^5$ to $R^9$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;

X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene;

M is titanium (Ti), zirconium (Zr), or hafnium (Hf);

A is carbon (C), silicon (Si), germanium (Ge), or tin (Sn); and

i and j are independently an integer of 0 to 4.)

[Formula 4]

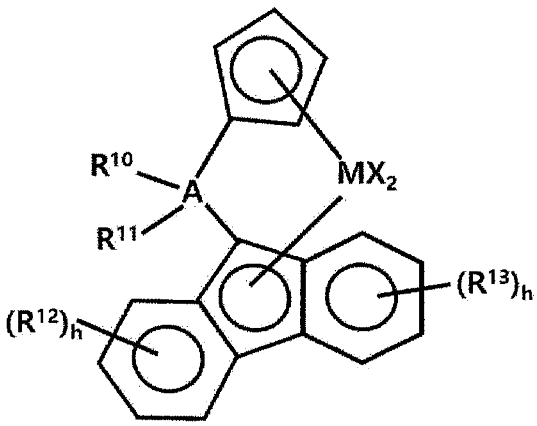

(In Formula 4,

$R^{10}$ to $R^{13}$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;

X2 is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene;

M is titanium (Ti), zirconium (Zr), or hafnium (Hf);

A is carbon (C), silicon (Si), germanium (Ge), or tin (Sn); and

h is an integer of 0 to 4.)

Here, substituents of $R^1$ to $R^{13}$ may independently be at least one selected from the group consisting of a halogen group, a cyano group, a nitro group, and a $C_1$ to $C_8$ alkyl group.

In one embodiment, in Formula 1, $R^1$ and $R^2$ may be independently a $C_1$ to $C_{20}$ alkyl group, X may be independently halogen, n may be 1, and m may be 4.

In Formula 2, $R^3$ and $R^4$ may be independently hydrogen, X may be independently halogen, k may be 0, and $\ell$ may be 2.

In Formula 3, $R^5$ and $R^6$ may be independently a $C_6$ to $C_{20}$ aryl group, $R^7$ to $R^9$ may be independently a $C_1$ to $C_{20}$ alkyl group, X may be independently halogen, and i and j may be independently 1.

In Formula 4, $R^{10}$ and $R^{11}$ may be independently a $C_6$ to $C_{20}$ aryl group, $R^{12}$ to $R^{13}$ may be independently a $C_1$ to $C_{20}$ alkyl group, X may be independently halogen, and h may be 1.

In Formulas 1 to 4, M may be zirconium (Zr), and in Formulas 3 and 4, A may be carbon (C).

According to one embodiment, the hybrid supported metallocene catalyst may be a triple hybrid catalyst, the type of which may vary depending on the method of preparing the hybrid supported metallocene catalyst, and may include the first transition metal compound, the third transition metal compound, and the fourth transition metal compound; or may include the second transition metal compound, the third transition metal compound, and the fourth transition metal compound.

According to one embodiment, when the hybrid supported metallocene catalyst includes the first transition metal compound, the third transition metal compound, and the fourth transition metal compound, the first transition metal compound, the third transition metal compound, and the fourth transition metal compound may be present in a mole ratio of about 3 to 5:about 1 to 2:about 4 to 6. In some embodiments, the first transition metal compound, the third transition metal compound, and the fourth transition metal compound may be present in a mole ratio of about 3.1 to 4.9:about 1.1 to 1.9:about 4.2 to 5.9, for example, about 3.2 to 3.8:about 1.6 to 1.9:about 5.3 to 5.9, about 3.8 to 4.4:about 1 to 1.6:about 4.8 to 5.3, or about 4.4 to 4.9:about 1.1 to 1.5:about 4.2 to 4.8.

Furthermore, when the hybrid supported metallocene catalyst includes the second transition metal compound, the third transition metal compound, and the fourth transition metal compound, the second transition metal compound, the third transition metal compound and the fourth transition metal compound may be present in a mole ratio of about 3 to 5:about 1 to 2:about 4 to 6. In some embodiments, the second transition metal compound, the third transition metal compound and the fourth transition metal compound may be present in a mole ratio of about 3.1 to 4.9:about 1.1 to

1.9:about 4.2 to 5.9, for example, about 3.2 to 3.8:about 1.6 to 1.9:about 5.3 to 5.9, about 3.8 to 4.4:about 1 to 1.6:about 4.8 to 5.3, or about 4.4 to 4.9:about 1.1 to 1.5:about 4.2 to 4.8.

In accordance with another aspect, a method of preparing polyethylene includes polymerizing an olefin represented by Formula 5 in the presence of a hybrid supported metallocene catalyst. Preferably, the method of preparing polyethylene includes adding an ethylene monomer, followed by polymerization.

[Formula 5] $CH_2=CHR^{14}$

In Formula 5, $R^{14}$ is hydrogen or a $C_1$ to $C_6$ alkyl or aryl group

According to one embodiment, the method of preparing polyethylene may include adding an ethylene monomer in the presence of the hybrid supported metallocene catalyst, followed by polymerization. Here, polymerization may be performed for about 0.5 hours to about 1.5 hours, preferably for about 0.8 hours to about 1.2 hours.

In description of the method of preparing polyethylene, redundant description of the hybrid supported metallocene catalyst will be omitted.

In accordance with a further aspect, the polyethylene prepared by the method of preparing polyethylene using the hybrid supported metallocene catalyst may have an MFR ratio ($MFR_{21.6}/MFR_{2.16}$) of about 58 to about 213.

According to one embodiment, the polyethylene prepared by the method of preparing polyethylene using the hybrid supported metallocene catalyst may have an $MFR_{2.16}$ of about 0.05 g/10 min to about 0.71 g/10 min, and an MFR ratio ($MFR_{21.6}/MFR_{2.16}$) of about 58 to about 213, as measured at a temperature of 190°C under a load of 2.16 kg. In some embodiments, the polyethylene may have an MFR ratio ($MFR_{21.6}/MFR_{2.16}$) of about 60 to about 211, for example, about 61 to about 80, about 80 to about 100, about 100 to about 120, about 120 to about 140, about 140 to about 160, about 160 to about 180, about 180 to about 200, or about 200 to about 213.

According to one embodiment, the polyethylene prepared using the hybrid supported metallocene catalyst prepared according to the loading sequence may have an $MFR/MFR_0$ value of less than about 0.980 or greater than about 1.10, preferably less than about 0.940 or greater than about 1.50, as calculated according to Equation 1, as a value capable of determining change in catalyst molecular weight distribution due to change of the loading method. In some embodiments, the polyethylene may have an $MFR/MFR_0$ value of about 0.77 to about 0.81, about 0.81 to about 0.84, or about 0.84 to about 0.975. In other embodiments, the polyethylene may have an $MFR/MFR_0$ value of, for example, about 1.105 to about 1.25, about 1.25 to about 1.45, about 1.45 to about 1.55, or about 1.45 to about 1.55.

[Equation 1]

$$MFR/MFR_0$$

(In Equation 1, MFR is an MFR value of a resin prepared using a hybrid supported metallocene catalyst sequentially loaded by the metallocene catalyst preparation method according to the present invention, and $MFR_0$ is an MFR value of a resin prepared using a hybrid supported metallocene catalyst simultaneously loaded without sequence.)

In other words, the polyethylene prepared using the hybrid supported metallocene catalyst by the polyethylene preparation method has a wide MFR ratio distribution, which enables flexible control of the molecular weight both in narrow and wide molecular weight distributions and thus can be usefully applied to development of target products.

Yet another aspect of the present invention relates to a method of controlling properties of a polyethylene resin prepared using the hybrid supported metallocene catalyst.

The method includes setting a PDI value, an MFR value, and an Mw value of a polyethylene resin to be targeted; and selecting a hybrid supported metallocene catalyst that expresses the set PDI value, MFR value, and Mw value.

The hybrid supported metallocene catalyst may be selected from a parent population of hybrid supported metallocene catalysts prepared by changing a loading sequence of three compounds selected from among the first transition metal compound, the second transition metal compound, the third transition metal compound, and the fourth transition metal compound.

For example, when the Mw value is greater than or equal to about 100,000, a hybrid supported metallocene catalyst prepared using the first transition metal compound, the third transition metal compound, and the fourth transition metal compound may be used. When the Mw value is less than about 100,000, a hybrid supported metallocene catalyst prepared using the second transition metal compound, the third transition metal compound, and the fourth transition metal compound may be used.

Next, the present invention will be described in more detail with reference to some examples. However, it should be noted that these examples are provided for illustration only and are not to be construed in any way as limiting the invention.

**Preparative Examples 1-1 to 2-6: Preparation of hybrid supported metallocene catalyst**

According to the compositions as shown in Tables 1 and 2, a first catalyst compound solution and a second catalyst compound solution were prepared by adding a transition metal compound and a co-catalyst (a 10% MAO) to toluene, followed by stirring the mixture at room temperature for 0.5 hours. Then, the first catalyst compound solution was added to 3.2 g of silica (SP2402), a carrier, and stirred at 75°C for 1 hour to prepare a transition metal-carrier complex. Next, the second catalyst compound solution was added to the transition metal-carrier complex slurry and additionally stirred at 75°C for 1 hour. The resulting product was washed with 10 mL of toluene three times and vacuum dried for 1 hour, thereby preparing 4.3 g of a hybrid supported metallocene catalyst in powder form.

Here, hybrid supported metallocene catalysts of Examples 1-1 to 1-6 comprises a compound represented by Formula 1-1, a compound represented by Formula 3-1, and a compound represented by Formula 4-1 in a mole ratio of 40:10:50; and hybrid supported metallocene catalysts of Examples 2-1 to 2-6 comprises a compound represented by Formula 2-1, a compound represented by Formula 3-1, and a compound represented by Formula 4-1 in a mole ratio of 40:10:50.

[Formula 1-1]

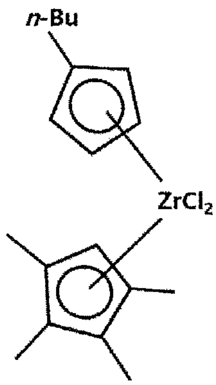

[Formula 2-1]

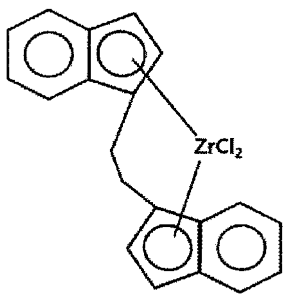

[Formula 3-1]

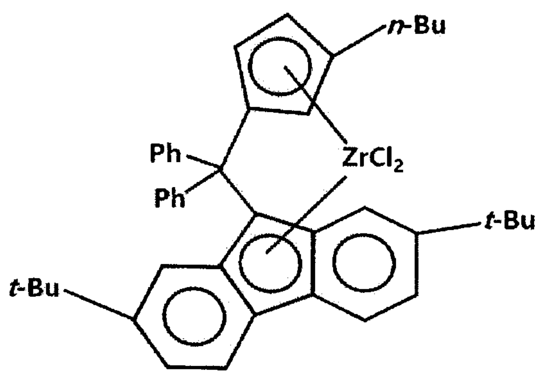

[Formula 4-1]

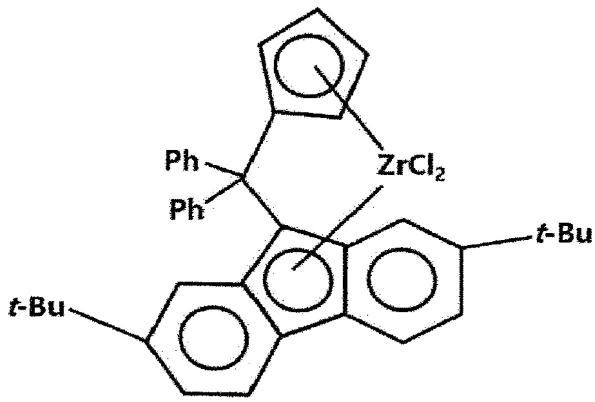

**Comparative Preparative Example 1: Preparation of hybrid supported metallocene catalyst prepared by mixing without sequence**

According to the same composition as shown in Table 1, a catalyst compound solution was prepared by simultaneously adding 22 mg of a compound 1 transition metal compound, 10 mg of a compound 3 transition metal compound, 47 mg of a compound 4 transition metal compound, and a co-catalyst (10% MAO) to toluene, followed by stirring the mixture at room temperature. Then, the catalyst compound solution was added to 3.2 g of silica (SP2402), a carrier, and stirred at 75°C for 3 hours. Then, the resulting product was washed with 10 mL of toluene three times and vacuum dried for 1 hour, thereby preparing 4.4 g of a hybrid supported metallocene catalyst in powder form.

**Comparative Preparative Example 2: Preparation of hybrid supported metallocene catalyst prepared by mixing without sequence**

According to the same composition as shown in Table 2, a catalyst compound solution was prepared by simultaneously adding 23 mg of a compound 2 transition metal compound, 10 mg of a compound 3 transition metal compound, 47 mg of a compound 4 transition metal compound, and a co-catalyst (10% MAO) to toluene, followed by stirring the mixture at room temperature. Then, the catalyst compound solution was added to 3.2 g of silica (SP2402), a carrier, and stirred at 75°C for 3 hours. Then, the resulting product was washed with 10 mL of toluene three times and vacuum dried for 1 hour, thereby preparing 4.4 g of a hybrid supported metallocene catalyst in powder form

Table 1

| | First catalyst compound solution | | Second catalyst compound solution | |
|---|---|---|---|---|
| | Transition metal compound | Primary co-catalyst (MAO) | Transition metal compound | Secondary co-catalyst (MAO) |
| Preparative Example 1-1 | Compound 3: 10 mg<br>Compound 4: 47 mg | 7.96 g | Compound 1: 22 mg | 5.30 g |
| Preparative Example 1-2 | Compound 1: 22 mg<br>Compound 4: 47 mg | 11.94 g | Compound 3: 10 mg | 1.33 g |
| Preparative Example 1-3 | Compound 1: 22 mg<br>Compound 3: 10 mg | 6.63 g | Compound 4: 47 mg | 6.63 g |
| Preparative Example 1-4 | Compound 1: 22 mg | 5.30 g | Compound 3: 10 mg<br>Compound 4: 47 mg | 7.96 g |
| Preparative Example 1-5 | Compound 3: 10 mg | 1.33 g | Compound 1: 22 mg<br>Compound 4: 47 mg | 11.94 g |
| Preparative Example 1-6 | Compound 4: 47 mg | 6.63 g | Compound 1: 22 mg<br>Compound 3: 10 mg | 6.63 g |

(continued)

| | First catalyst compound solution | | Second catalyst compound solution | |
|---|---|---|---|---|
| | Transition metal compound | Primary co-catalyst (MAO) | Transition metal compound | Secondary co-catalyst (MAO) |
| Comparative Preparative Example 1 | Without distinction between primary and secondary addition, 22 mg of Compound 1, 10 mg of Compound 3, 47 mg of Compound 4, and 13.3 g of MAO were used. | | | |
| * Compound 1: Compound represented by Formula 1-1 = (n-butylcyclopentadienyl)(tetramethylcyclopentadienyl) zirconium (IV) dichloride purchased from MCN<br>Compound 3: Compound represented by Formula 3-1 = (Diphenylmethylidene(n-butylcyclopentadienyl)(2,7-tert-butylfluoren-9-yl)zirconium dichloride purchased from MCN<br>Compound 4: Compound represented by Formula 4-1 = (Diphenylmethylidene(cyclopentadienyl)(2,7-tert-butylfluoren-9-yl) zirconium dichloride purchased from MCN<br>* Carrier SP-2402 purchased from Grace; co-catalyst, 10% MAO purchased from Lake materials<br>* All materials were used without further purification, unless stated otherwise. | | | | |

Table 2

| | First catalyst compound solution | | Second catalyst compound solution | |
|---|---|---|---|---|
| | Primary compound | Primary co-catalyst (MAO) | Secondary compound | Secondary co-catalyst (MAO) |
| Preparative Example 2-1 | Compound 3: 10 mg<br>Compound 4: 47 mg | 7.96 g | Compound 2: 23 mg | 5.30 g |
| Preparative Example 2-2 | Compound 2: 23 mg<br>Compound 4: 47 mg | 11.94 g | Compound 3: 10 mg | 1.33 g |
| Preparative Example 2-3 | Compound 2: 23 mg<br>Compound 3: 10 mg | 6.63 g | Compound 4: 47 mg | 6.63 g |
| Preparative Example 2-4 | Compound 2: 23 mg | 5.30 g | Compound 3: 10 mg<br>Compound 4: 47 mg | 7.96 g |
| Preparative Example 2-5 | Compound 3: 10 mg | 1.33 g | Compound 2: 23 mg<br>Compound 4: 47 mg | 11.94 g |
| Preparative Example 2-6 | Compound 4: 47 mg | 6.63 g | Compound 2: 23 mg<br>Compound 3: 10 mg | 6.63 g |
| Comparative Preparative Example 2 | Without distinction between primary and secondary addition, 23 mg of Compound 2, 10 mg of Compound 3, 47 mg of Compound 4, and 13.3 g of MAO were used. | | | |
| * Compound 2: Compound represented by Formula 2-1 = [Rac-ethylenebis(indenyl)]zirconium(IV) dichloride purchased from MCN<br>Compound 3: Compound represented by Formula 3-1 = (Diphenylmethylidene(n-butylcyclopentadienyl)(2,7-tert-butylfluoren-9-yl)zirconium dichloride purchased from MCN<br>Compound 4: Compound represented by Formula 4-1 = (Diphenylmethylidene(cyclopentadienyl)(2,7-tert-butylfluoren-9-yl) zirconium dichloride purchased from MCN<br>* Carrier SP-2402 purchased from Grace; co-catalyst, MAO 10% purchased from Lake materials<br>* All materials are used without further purification, unless stated otherwise. | | | | |

**Example 1: Preparation of polyolefin (polyethylene)**

30 mg of the hybrid supported metallocene catalyst prepared in Preparative Example 1-1, 1 L of hexane, and 0.6 ml of a scavenger, 1 M triisobutyl aluminum (TIBAL), were added to a slurry reactor, followed by copolymerization of ethylene for 1 hour. The ethylene pressure was set to 14 kgf/$cm^2$, 1-hexene was initially added in an amount of 10 ml, and hydrogen was continuously added at a rate of 10 cc per minute after initial addition of 100 cc to prepare polyethylene.

**Example 2: Preparation of polyolefin (polyethylene)**

Polyethylene was prepared in the same manner as in Example 1 except that the hybrid supported metallocene catalyst prepared in Preparative Example 1-2 was used.

**Example 3: Preparation of polyolefin (polyethylene)**

Polyethylene was prepared in the same manner as in Example 1 except that the hybrid supported metallocene catalyst prepared in Preparative Example 1-5 was used.

**Comparative Example 1: Preparation of polyolefin (polyethylene)**

Polyethylene was prepared in the same manner as in Example 1 except that the hybrid supported metallocene catalyst prepared in Comparative Preparative Example 1 was used

**Example 4: Preparation of polyolefin (polyethylene)**

30 mg of the hybrid supported metallocene catalyst prepared in Example 2-1, 1 L of hexane, and 0.6 ml of a scavenger, 1 M triisobutyl aluminum (TIBAL), were added to a slurry reactor, followed by copolymerization of ethylene for 1 hour. The ethylene pressure was set to 14 $kgf/cm^2$, 1-hexene was initially added in an amount of 10 ml, and hydrogen was continuously added at a rate of 10 cc per minute after initial addition of 100 cc to prepare polyethylene

**Example 5: Preparation of polyolefin (polyethylene)**

Polyethylene was prepared in the same manner as in Example 4 except that the hybrid supported metallocene catalyst prepared in Preparative Example 2-3 was used.

**Example 6: Preparation of polyolefin (polyethylene)**

Polyethylene was prepared in the same manner as in Example 4 except that the hybrid supported metallocene catalyst prepared in Preparative Example 2-6 was used.

**Comparative Example 2: Preparation of polyolefin (polyethylene)**

Polyethylene was prepared in the same manner as in Example 4 except that the hybrid supported metallocene catalyst prepared in Comparative Preparative Example 2 was used.

**Method of analyzing physical properties of polyethylene**

- Density: Density was measured in accordance with ASTM D1505.
- Activity ($g_{PE}/g_{cat}$): The ratio was calculated by measuring the mass of a polymer obtained in a polymerization experiment and the mass of a catalyst added during the polymerization experiment.
- MI: Melt flowability MI denotes an extrudate amount for 10 minutes under a load of 2.16 kg and was measured at 190°C in accordance with ASTM 1238.
- MFR: MFR is the ratio of MFI to MI, that is, MFI/MI, where MFI denotes an extrudate amount for 10 minutes under a load of 21.6 kg and was measured at 190°C in accordance with ASTM 1238.
- Molecular weight distribution (PDI): Number average molecular weight (Mn) and weight average molecular weight (Mw) were measured by 3D gel permeation chromatography-FTIR (3D GPC-FTIR) at 170°C, and the molecular weight distribution (PDI, Mw/Mn) was expressed as a ratio of Mw to Mn.
- Thermal characteristic ($T_m$): Thermal characteristic was measured using a differential scanning calorimeter.
- $MFR/MFR_0$:

$$\frac{MFR}{MFR_0} = \frac{MFR\ \ of\ resin\ prepared\ in\ Example}{MFR\ of\ resin\ prepared\ in\ Comparative\ Example}$$

Specifically, in $MFR/MFR_0$ of the resins of Examples 1 to 6, $MFR_0$ denotes an MFR value of the resin prepared in

Comparative Example 1, and in $MFR/MFR_0$ of the resins of Examples 7 to 12, $MFR_0$ denotes an MFR value of the resin prepared in Comparative Example 2. In Comparative Examples 1 and 2, all catalyst compounds and the co-catalyst material were reacted and loaded in a single step unlike Examples 1 to 12.

- X (%): Crystallinity was measured based on an area occupied by a crystalline part of a peak relative to a total area of the peak on a differential scanning calorimeter, in which the peak is divided into the crystalline part and a non-crystalline part.

**Properties of polyethylene**

Properties of polyethylene resins prepared in Examples 1 to 12 and Comparative Examples 1 and 2 were analyzed and analysis results are shown in Tables 3 and 4 and in FIGS. 1 and 2. Specifically, FIG. 1 is a graph depicting molecular weight distributions of the polyethylene resins prepared in Examples 1 to 6 and Comparative Example 1, and FIG. 2 is a graph depicting molecular weight distributions of the polyethylene resins prepared in Examples 7 to 12 and Comparative Example 2.

Table 3

| Example | Catalyst | Activity ($g_{PE}/g_{cat}$) | MI ($I_{2.16}$) | MFR ($I_{21.6}/I_{2.16}$) | $MFR/MFR_0$ | Mw | PDI | Tm (°C) | X (%) |
|---|---|---|---|---|---|---|---|---|---|
| 1 | Preparative Example 1-1 | 1740 | 0.42 | 111 | 0.787 | 157600 | 49.97 | 128.9 | 63.01 |
| 2 | Preparative Example 1-2 | 1580 | 0.05 | 121 | 0.858 | 201300 | 57.28 | 127.4 | 63.04 |
| 3 | Preparative 1-5 | 1380 | 0.12 | 213 | 1.511 | 165100 | 49.61 | 129.43 | 70.57 |
| Comparative Preparative Example 1 | | 1700 | 0.37 | 141 | 1 | 184500 | 25.60 | 129.30 | 61.6 |

Table 4

| Example | Catalyst | Activity ($g_{PE}/g_{cat}$) | MI ($I_{2.16}$) | MFR ($I_{21.6}/I_{2.16}$) | $MFR/MFR_0$ | Mw | PDI | Tm (°C) | X (%) |
|---|---|---|---|---|---|---|---|---|---|
| 4 | Preparative Example 2-1 | 1800 | 0.17 | 125 | 1.302 | 2600 | 42.55 | 128.3 | 62.15 |
| 5 | Preparative Example 2 | 1760 | 0.31 | 109 | 1.135 | 3500 | 36.46 | 126.95 | 61.68 |
| 6 | Preparative Example 2-6 | 2300 | 0.21 | 79 | 0.823 | 3200 | 39.66 | 128.18 | 61.32 |
| Comparative Preparative Example 2 | | 1500 | 0.28 | 96 | 1 | 3600 | 30.6 | 127.7 | 66.3 |

Referring to Tables 3 and 4 and FIGS. 1 and 2, when polyethylene was prepared using the catalysts prepared by changing the loading sequence in Examples 1-1 to 1-6, a wide PDI range of 31 or higher could be obtained without changing the catalyst species or the content thereof. Furthermore, a PDI of 31 or higher could also be obtained when polyethylene was prepared using the catalysts prepared by changing the loading sequence in Examples 2-1 to 2-6.

In addition, $MFR/MFR_0$ may be a value that can be used to determine change in molecular weight distribution of a catalyst according to change in loading method. Among the $MFR/MFR_0$ values of the polyethylene resins prepared in Examples 1 to 12, the $MFR/MFR_0$ values of the polyethylene resins prepared in Examples 1 to 6 were less than 0.940 or greater than 1.150, and the $MFR/MFR_0$ values of the polyethylene resins prepared in Examples 7 to 12 were less than 0.980 or greater than 1.10, thereby securing a wide range of molecular weights. In particular, it could be seen from each example that the prepared resins exhibited a wide range of differences of 1.5 or more or 0.8 or less.

That is, the hybrid supported metallocene catalysts prepared by changing the loading sequence have an advantage of providing polyethylene with a wider molecular weight distribution than the catalysts of Comparative Examples 1 and 2, which were loaded at the same time without loading sequence.

It should be understood that various modifications, changes, alterations, and equivalent embodiments may be made by those skilled in the art without departing from the spirit and scope of the invention.

[Industrial Applicability]

In a method of preparing a hybrid supported metallocene catalyst, a metallocene catalyst applicable to preparation of polyolefin having a wide molecular weight distribution is prepared by changing a loading sequence of three compounds selected from among four transition metal compounds and having specific chemical formulas and contents, and the polyolefin can be applied to various target products by controlling properties of the polyethylene.

## Claims

**1.** A method of preparing a hybrid supported metallocene catalyst, comprising:

preparing a first catalyst compound solution comprising one or two catalyst compounds selected from the group consisting of a first transition metal compound represented by Formula 1, a second transition metal compound represented by Formula 2, a third transition metal compound represented by Formula 3, and a fourth transition metal compound represented by Formula 4;
preparing a second catalyst compound solution comprising one or two transition metal compounds selected from the group consisting of the first to fourth transition metal compounds not contained in the first catalyst compound solution;
preparing a transition metal-carrier complex by adding the first catalyst compound solution to a carrier; and further adding the second catalyst compound solution to the transition metal-carrier complex;
wherein the hybrid supported metallocene catalyst comprises three compounds selected from among the first transition metal compound, the second transition metal compound, the third transition metal compound, and the fourth transition metal compound.

[Formula 1]

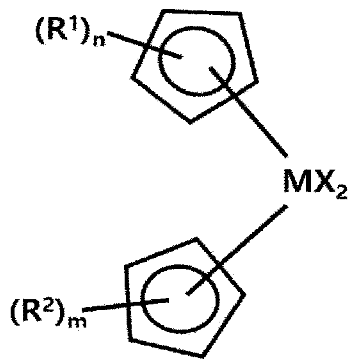

(In Formula 1,
$R^1$ and $R^2$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;
$X_2$ is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene; and
M is titanium (Ti), zirconium (Zr), or hafnium (Hf); and
n and m are independently an integer of 0 to 5.)

[Formula 2]

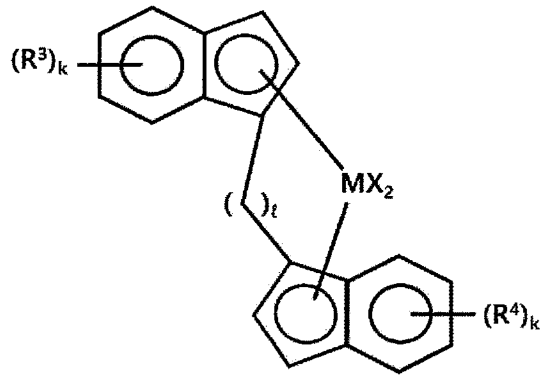

(In Formula 2,

$R^3$ and $R^4$ are independently hydrogen, a substituted or unsubstituted $C_1$ to $C_{20}$ alkyl group, a substituted or unsubstituted $C_2$ to $C_{20}$ alkenyl group, a substituted or unsubstituted $C_6$ to $C_{20}$ aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;

$X_2$ is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene;

M is titanium (Ti), zirconium (Zr), or hafnium (Hf); and

$\ell$ is an integer of 1 to 6, and k is an integer of 0 to 4.)

[Formula 3]

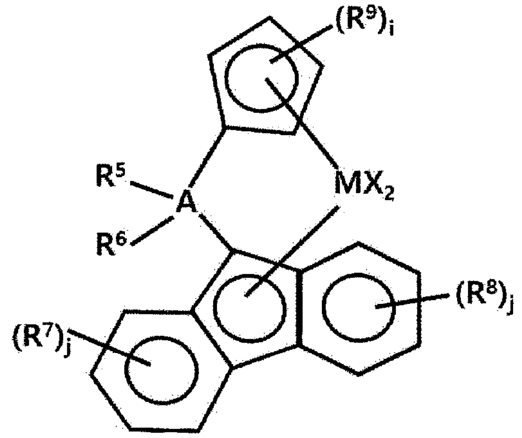

(In Formula 3,

$R^5$ to $R^9$ are independently hydrogen, a substituted or unsubstituted $C_1$ to $C_{20}$ alkyl group, a substituted or unsubstituted $C_2$ to $C_{20}$ alkenyl group, a substituted or unsubstituted $C_6$ to $C_{20}$ aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;

$X_2$ is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene;

M is titanium (Ti), zirconium (Zr), or hafnium (Hf);

A is carbon (C), silicon (Si), germanium (Ge), or tin (Sn); and

i and j are independently an integer of 0 to 4.)

[Formula 4]

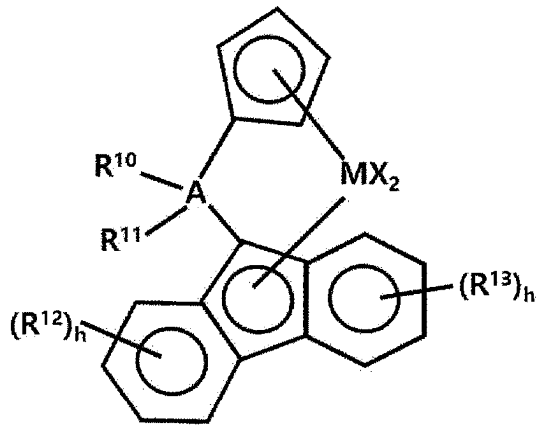

(In Formula 4,
$R^{10}$ to $R^{13}$ are independently hydrogen, a substituted or unsubstituted $C_1$ to $C_{20}$ alkyl group, a substituted or unsubstituted $C_2$ to $C_{20}$ alkenyl group, a substituted or unsubstituted $C_6$ to $C_{20}$ aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;
$X_2$ is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene;
M is titanium (Ti), zirconium (Zr), or hafnium (Hf);
A is carbon (C), silicon (Si), germanium (Ge), or tin (Sn); and
h is an integer of 0 to 4.)

2. The method of preparing a hybrid supported metallocene catalyst according to claim 1, wherein the hybrid supported metallocene catalyst comprises the first transition metal compound, the third transition metal compound, and the fourth transition metal compound.

3. The method of preparing a hybrid supported metallocene catalyst according to claim 2, wherein the first transition metal compound, the third transition metal compound and the fourth transition metal compound are present in a mole ratio of 3 to 5:1 to 2:4 to 6.

4. The method of preparing a hybrid supported metallocene catalyst according to claim 1, wherein the hybrid supported metallocene catalyst comprises the second transition metal compound, the third transition metal compound, and the fourth transition metal compound.

5. The method of preparing a hybrid supported metallocene catalyst according to claim 4, wherein the second transition metal compound, the third transition metal compound, and the fourth transition metal compound are present in a mole ratio of 3 to 5:1 to 2:4 to 6.

6. The method of preparing a hybrid supported metallocene catalyst according to claim 1, wherein

in Formula 1,

$R^1$ and $R^2$ are independently a $C_1$ to $C_{20}$ alkyl group,
$X_2$ is halogen, and
n is 1, and m is 4;
in Formula 2,
$R^3$ and $R^4$ are independently hydrogen,
$X_2$ is halogen, and
k is 0, and $\ell$ is 2;
in Formula 3,
$R^5$ and $R^6$ are independently a $C_6$ to $C_{20}$ aryl group,
$R^7$ to $R^9$ are independently a $C_1$ to $C_{20}$ alkyl group,
$X_2$ is halogen, and
i and j are independently 1; and
in Formula 4,
$R^{10}$ and $R^{11}$ are independently a $C_6$ to $C_{20}$ aryl group,
$R^{12}$ to $R^{13}$ are independently a $C_1$ to $C_{20}$ alkyl group,
$X_2$ is halogen, and
h is 1.

**7.** The method of preparing a hybrid supported metallocene catalyst according to claim 1, wherein,

in Formulas 1, 2, 3 and 4, M is zirconium (Zr); and
in Formulas 3 and 4, A is carbon (C).

**8.** A hybrid supported metallocene catalyst prepared by the method of preparing a hybrid supported metallocene catalyst according to any one of claims 1 to 7.

**9.** A hybrid supported metallocene catalyst comprising: three compounds selected from the group consisting of: a first transition metal compound represented by Formula 1; a second transition metal compound represented by Formula 2; a third transition metal compound represented by Formula 3; and a fourth transition metal compound represented by Formula 4,
the hybrid supported metallocene catalyst satisfying Equation 2:

[Formula 1]

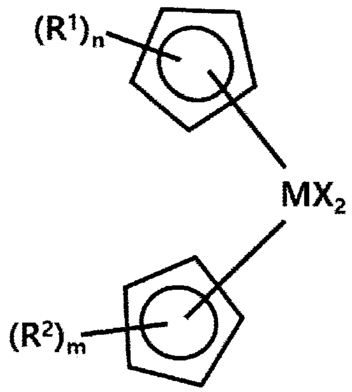

(In Formula 1,

$R^1$ and $R^2$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or unsubstituted $C_1$ to $C_{20}$ alkyl group, a substituted or unsubstituted $C_1$ to $C_{20}$ heteroalkyl group, a substituted or unsubstituted C3 to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;

$X_2$ is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene; and

M is titanium (Ti), zirconium (Zr), or hafnium (Hf); and

n and m are independently an integer of 0 to 5.)

[Formula 2]

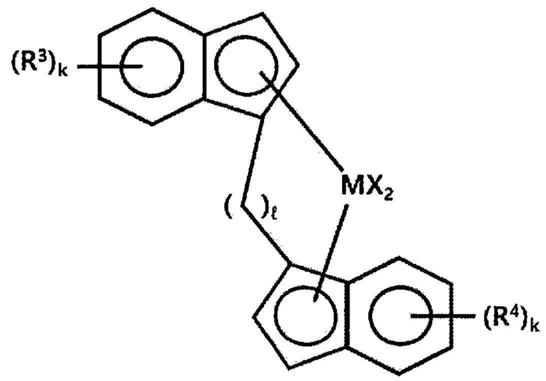

(In Formula 2,

$R^3$ and $R^4$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;

$X_2$ is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene; and

M is titanium (Ti), zirconium (Zr), or hafnium (Hf); and

$\ell$ is an integer of 1 to 6, and k is an integer of 0 to 4.)

[Formula 3]

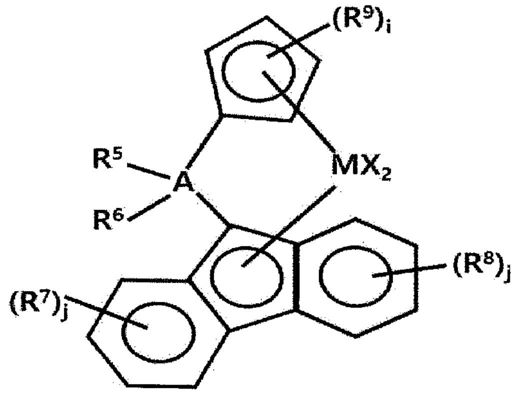

(In Formula 3,

$R^5$ to $R^9$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;

$X_2$ is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene;

M is titanium (Ti), zirconium (Zr), or hafnium (Hf);

A is carbon (C), silicon (Si), germanium (Ge), or tin (Sn); and

i and j are independently an integer of 0 to 4.)

[Formula 4]

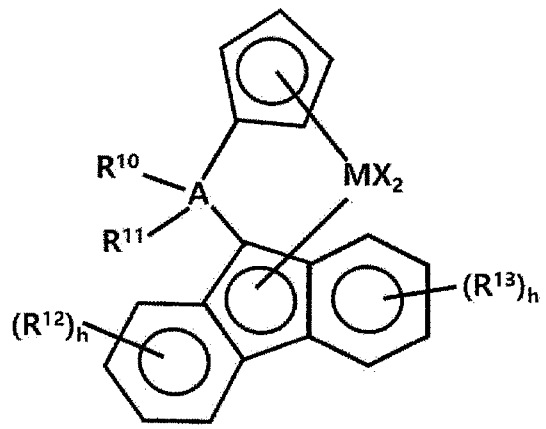

(In Formula 4,

$R^{10}$ to $R^{13}$ are independently hydrogen, a substituted or unsubstituted $C_1$ to $C_{20}$ alkyl group, a substituted or unsubstituted $C_2$ to $C_{20}$ alkenyl group, a substituted or unsubstituted C6 to C20 aryl group, a substituted or unsubstituted $C_1$ to $C_{20}$ alkyl group, a substituted or unsubstituted $C_1$ to $C_{20}$ heteroalkyl group, a substituted or unsubstituted $C_3$ to $C_{20}$ heteroaryl group, a substituted or unsubstituted $C_1$ to $C_{20}$ alkylamido group, a substituted or unsubstituted $C_6$ to $C_{20}$ arylamido group, a substituted or unsubstituted $C_1$ to $C_{20}$ alkylidene group, or a substituted or unsubstituted $C_1$ to $C_{20}$ silyl group;

$X_2$ is halogen, a $C_1$ to $C_{20}$ alkyl group, a $C_2$ to $C_{20}$ alkenyl group, a $C_2$ to $C_{20}$ alkynyl, a $C_6$ to $C_{20}$ aryl group, a $C_6$ to $C_{20}$ aryl group, a $C_1$ to $C_{20}$ alkyl group, a $C_1$ to $C_{20}$ alkylamido group, a $C_6$ to $C_{20}$ arylamido group, or a $C_1$ to $C_{20}$ alkylidene;

M is titanium (Ti), zirconium (Zr), or hafnium (Hf);

A is carbon (C), silicon (Si), germanium (Ge), or tin (Sn); and

h is an integer of 0 to 4.)

[Equation 2]

$$PDI_{PE} \geq 31$$

(In Equation 2, $PDI_{PE}$ denotes a molecular weight distribution (PDI, Mw/Mn) value measured by gel permeation chromatography at a measurement temperature of 170°C for polyethylene polymerized using a hybrid supported metallocene catalyst.)

**10.** The hybrid supported metallocene catalyst according to claim 9, comprising the first transition metal compound, the third transition metal compound, and the fourth transition metal compound.

**11.** The hybrid supported metallocene catalyst according to claim 10, wherein the first transition metal compound, the third transition metal compound, and the fourth transition metal compound are present in a mole ratio of 3 to 5:1 to 2:4 to 6.

**12.** The hybrid supported metallocene catalyst according to claim 9, comprising the second transition metal compound, the third transition metal compound, and the fourth transition metal compound.

**13.** The hybrid supported metallocene catalyst according to claim 12, wherein the second transition metal compound, the third transition metal compound and the fourth transition metal compound are present in a mole ratio of 3 to 5:1 to 2:4 to 6.

**14.** The hybrid supported metallocene catalyst according to claim 9, wherein in Formula 1,

$R^1$ and $R^2$ are independently a $C_1$ to $C_{20}$ alkyl group,
$X_2$ is halogen, and
n is 1, and m is 4;
in Formula 2,
$R^3$ and $R^4$ are independently hydrogen,
$X_2$ is halogen, and
k is 0, and $\ell$ is 2;
in Formula 3,
$R^5$ and $R^6$ are independently a $C_6$ to $C_{20}$ aryl group,
$R^7$ to $R^9$ are independently a $C_1$ to $C_{20}$ alkyl group,
X2 is halogen, and
i and j are independently 1; and
in Formula 4,
$R^{10}$ and $R^{11}$ are independently a $C_6$ to $C_{20}$ aryl group,
$R^{12}$ to $R^{13}$ are independently a $C_1$ to $C_{20}$ alkyl group,
$X_2$ is halogen, and
h is 1.

**15.** The hybrid supported metallocene catalyst according to claim 9, wherein,

in Formulas 1, 2, 3, and 4, M is zirconium (Zr); and
in Formulas 3 and 4, A is carbon (C).

**16.** A polyethylene resin polymerized in the presence of the hybrid supported metallocene catalyst according to any one of claims 9 to 15, the polyethylene resin having an MFR ratio ($MFR_{21.6}/MFR_{2.16}$) of 58 to 213.

**17.** The polyethylene resin according to claim 16, wherein the polyethylene resin has an $MFR/MFR_0$ value of less than 0.980 or greater than 1.10, as calculated according to Equation 1.

[Equation 1]

$$MFR/MFR_0$$

(In Equation 1,

MFR is an MFR value according to claim 16, and
$MFR_0$ is an MFR value of a resin prepared using a hybrid supported metallocene catalyst simultaneously loaded without sequence.)

**18.** The polyethylene resin according to claim 16, wherein the polyethylene resin has a molecular weight distribution (PDI, Mw/Mn) value of 31 or more, as measured by gel permeation chromatography at a measurement temperature of 170°C.

**19.** A method of controlling properties of a polyethylene resin prepared using the hybrid supported metallocene catalyst according to any one of claims 9 to 15, the method comprising:

setting a PDI value, an MFR value, or an Mw value of a target polyethylene resin; and
selecting a hybrid supported metallocene catalyst expressing the set PDI value, MFR value, or Mw value,
wherein the hybrid supported metallocene catalyst is selected from a parent population of hybrid supported metallocene catalysts prepared by changing a loading sequence of three compounds selected from among the first transition metal compound, the second transition metal compound, the third transition metal compound, and the fourth transition metal compound.

**20.** The method of controlling properties of a polyethylene resin according to claim 19, wherein,

when the preset Mw value is about 100,000 or more, a hybrid supported metallocene catalyst prepared using the first transition metal compound, the third transition metal compound, and the fourth transition metal compound is used, and
when the preset Mw value is less than about 100,000, a hybrid supported metallocene catalyst prepared using the second transition metal compound, the third transition metal compound, and the fourth transition metal compound is used.

FIG.1

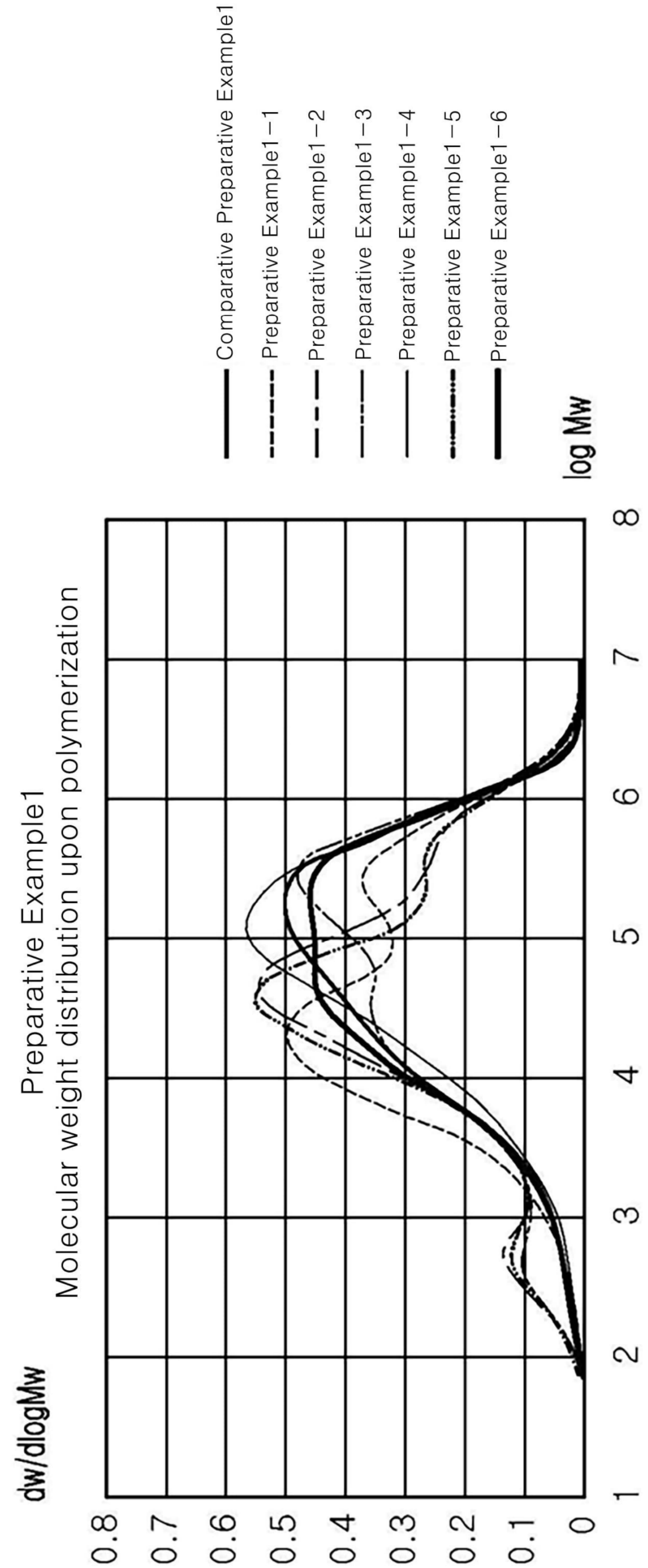
Preparative Example1
Molecular weight distribution upon polymerization
dw/dlogMw
0.8
0.7
0.6
0.5
0.4
0.3
0.2
0.1
0
1
2
3
4
5
6
7
8
log Mw
Comparative Preparative Example1
Preparative Example1−1
Preparative Example1−2
Preparative Example1−3
Preparative Example1−4
Preparative Example1−5
Preparative Example1−6

FIG.2

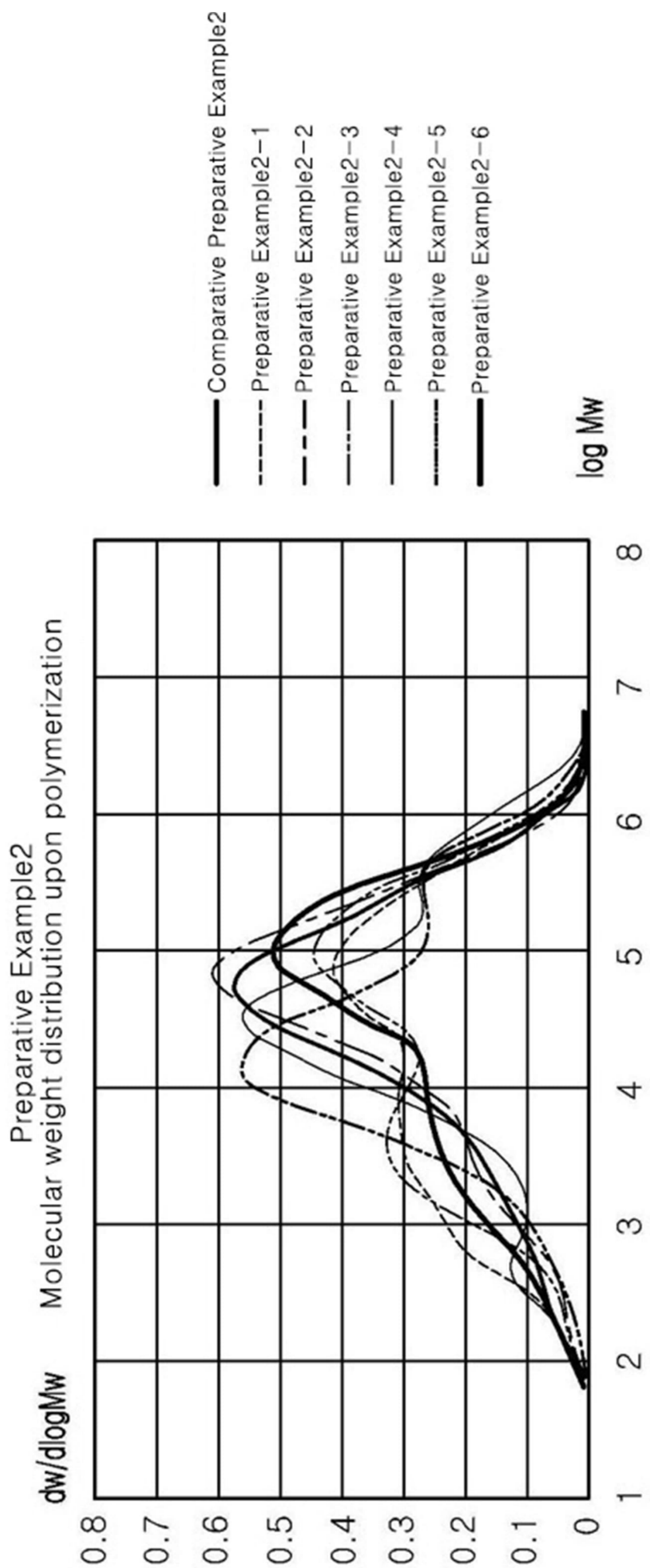
Preparative Example2
Molecular weight distribution upon polymerization
dw/dlogMw
0.8
0.7
0.6
0.5
0.4
0.3
0.2
0.1
0
1
2
3
4
5
6
7
8
log Mw
Comparative Preparative Example2
Preparative Example2−1
Preparative Example2−2
Preparative Example2−3
Preparative Example2−4
Preparative Example2−5
Preparative Example2−6

**INTERNATIONAL SEARCH REPORT**

International application No.
**PCT/KR2024/003971**

**A. CLASSIFICATION OF SUBJECT MATTER**

**C08F 4/6592**(2006.01)i; **C08F 110/02**(2006.01)i

According to International Patent Classification (IPC) or to both national classification and IPC

**B. FIELDS SEARCHED**

Minimum documentation searched (classification system followed by classification symbols)

C08F 4/6592(2006.01); B01J 21/02(2006.01); B01J 31/38(2006.01); B01J 37/02(2006.01); C08F 10/00(2006.01); C08F 4/02(2006.01); C08F 4/64(2006.01); C08F 4/646(2006.01); C08F 4/659(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 메탈로센 촉매(metallocene catalyst), 폴리올레핀(polyolefin), 담지(support), 혼성(hybrid)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2018-0043898 A (DAELIM INDUSTRIAL CO., LTD.) 02 May 2018 (2018-05-02)<br>See claim 1; paragraphs [0174]-[0179] and [0186]-[0189]; and table 2. | 1-20 |
| Y | KR 10-2019-0096290 A (LG CHEM, LTD.) 19 August 2019 (2019-08-19)<br>See claims 1 and 5; and paragraphs [0011], [0372]-[0377] and [0495]. | 1-20 |
| Y | JP 2006-504858 A (EXXONMOBIL CHEMICAL PATENTS INC.) 09 February 2006 (2006-02-09)<br>See abstract; and claim 55. | 19,20 |
| A | KR 10-1249995 B1 (LG CHEM, LTD.) 03 April 2013 (2013-04-03)<br>See entire document. | 1-20 |
| A | KR 10-2015-0062004 A (LG CHEM, LTD.) 05 June 2015 (2015-06-05)<br>See entire document. | 1-20 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 July 2024** | **15 July 2024** |

Name and mailing address of the ISA/KR

**Korean Intellectual Property Office**
**Government Complex-Daejeon Building 4, 189 Cheongsa-ro, Seo-gu, Daejeon 35208**

Facsimile No. **+82-42-481-8578**

Authorized officer

Telephone No.

Form PCT/ISA/210 (second sheet) (July 2022)

**INTERNATIONAL SEARCH REPORT**
**Information on patent family members**

International application No.
**PCT/KR2024/003971**

| Patent document cited in search report | Publication date (day/month/year) | Patent family member(s) | Publication date (day/month/year) |
|---|---|---|---|
| KR 10-2018-0043898 A | 02 May 2018 | KR 10-2060669 B1 | 31 December 2019 |
| | | WO 2018-074897 A1 | 26 April 2018 |
| KR 10-2019-0096290 A | 19 August 2019 | CN 111491734 A | 04 August 2020 |
| | | CN 111491734 B | 10 November 2023 |
| | | EP 3714975 A1 | 30 September 2020 |
| | | EP 3714975 A4 | 16 June 2021 |
| | | EP 3714975 B1 | 26 April 2023 |
| | | KR 10-2342780 B1 | 23 December 2021 |
| | | US 11091569 B2 | 17 August 2021 |
| | | US 2020-0385497 A1 | 10 December 2020 |
| | | WO 2019-156482 A1 | 15 August 2019 |
| JP 2006-504858 A | 09 February 2006 | AU 2003-302033 A1 | 15 June 2004 |
| | | AU 2003-304716 A1 | 25 November 2005 |
| | | BR 0315341 A | 13 June 2006 |
| | | BR 0315341 B1 | 18 February 2014 |
| | | CA 2499951 A1 | 03 June 2004 |
| | | CA 2499951 C | 28 May 2013 |
| | | CN 101838362 A | 22 September 2010 |
| | | CN 101838362 B | 28 November 2012 |
| | | DE 102005050378 A1 | 27 July 2006 |
| | | EP 1558655 A2 | 03 August 2005 |
| | | EP 1558655 B1 | 29 August 2012 |
| | | EP 1620479 A1 | 01 February 2006 |
| | | EP 1620479 B1 | 24 July 2013 |
| | | EP 2261292 A2 | 15 December 2010 |
| | | EP 2261292 A3 | 16 February 2011 |
| | | EP 2261292 B1 | 23 July 2014 |
| | | ES 2394304 T3 | 30 January 2013 |
| | | FR 2877347 A1 | 05 May 2006 |
| | | GB 2420348 A | 24 May 2006 |
| | | GB 2420348 B | 18 November 2009 |
| | | JP 2006-193719 A | 27 July 2006 |
| | | JP 2007-532761 A | 15 November 2007 |
| | | JP 2007-532762 A | 15 November 2007 |
| | | JP 2007-533796 A | 22 November 2007 |
| | | JP 2008-546890 A | 25 December 2008 |
| | | JP 2013-047341 A | 07 March 2013 |
| | | JP 4972284 B2 | 11 July 2012 |
| | | JP 4991710 B2 | 01 August 2012 |
| | | JP 5210629 B2 | 12 June 2013 |
| | | JP 5348732 B2 | 20 November 2013 |
| | | JP 5775854 B2 | 09 September 2015 |
| | | KR 10-1113341 B1 | 27 September 2012 |
| | | KR 10-1156777 B1 | 18 June 2012 |
| | | KR 10-2005-0062617 A | 23 June 2005 |
| | | KR 10-2007-0015579 A | 05 February 2007 |
| | | US 2004-0127614 A1 | 01 July 2004 |
| | | US 2004-0138392 A1 | 15 July 2004 |
| | | US 2007-0293640 A1 | 20 December 2007 |
| | | US 2009-0069475 A1 | 12 March 2009 |

Form PCT/ISA/210 (patent family annex) (July 2022)

**INTERNATIONAL SEARCH REPORT**
**Information on patent family members**

International application No.
**PCT/KR2024/003971**

| Patent document cited in search report | Publication date (day/month/year) | Patent family member(s) | Publication date (day/month/year) |
|---|---|---|---|
| | | US 2012-0095157 A1 | 19 April 2012 |
| | | US 2014-0066567 A1 | 06 March 2014 |
| | | US 7294681 B2 | 13 November 2007 |
| | | US 7524910 B2 | 28 April 2009 |
| | | US 8071687 B2 | 06 December 2011 |
| | | US 8088867 B2 | 03 January 2012 |
| | | US 8563647 B2 | 22 October 2013 |
| | | US 8957159 B2 | 17 February 2015 |
| | | WO 2004-046214 A2 | 03 June 2004 |
| | | WO 2004-046214 A3 | 05 August 2004 |
| | | WO 2005-108442 A1 | 17 November 2005 |
| KR 10-1249995 B1 | 03 April 2013 | CN 102227449 A | 26 October 2011 |
| | | EP 2374822 A2 | 12 October 2011 |
| | | EP 2374822 A4 | 16 October 2013 |
| | | EP 2374822 B1 | 15 October 2014 |
| | | KR 10-2010-0067627 A | 21 June 2010 |
| | | WO 2010-068045 A2 | 17 June 2010 |
| | | WO 2010-068045 A3 | 26 August 2010 |
| KR 10-2015-0062004 A | 05 June 2015 | KR 10-1606825 B1 | 28 March 2016 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 102455178 B